# EUROPEAN PATENT SPECIFICATION

(11) **EP 2 363 689 B1**
(45) Date of publication and mention of the grant of the patent: **17.02.2016**
(21) Application number: 11156418.3
(22) Date of filing: 01.03.2011
(51) Int. Cl.: G01C 19/5628

(54) **Motion sensor, and method of manufacturing motion sensor**
Bewegungssensor und Verfahren zur Herstellung des Bewegungssensors
Capteur de mouvements et procédé de fabrication du capteur de mouvements

(30) Priority: 01.03.2010 JP 2010043850
(43) Date of publication of application: 07.09.2011
(73) Proprietor: Seiko Epson Corporation, Shinjuku-ku Tokyo 163-0811 (JP)
(72) Inventor: Otsuki, Tetsuya, Nagano 392-8502 (JP)
(74) Representative: MERH-IP Matias Erny Reichl Hoffmann Patentanwälte PartG mbB

(56) References cited:
- EP-A1- 0 660 081
- EP-A1- 1 852 679
- US-A1- 2004 238 926

## Description

### BACKGROUND

### 1. Technical Field

The present invention relates to a sensor device, a method of manufacturing a sensor device, a motion sensor having a sensor device, and a method of manufacturing a motion sensor.

### 2. Related Art

In a motion sensor which senses acceleration, angular speed, or the like in the related art, a configuration using a sensor device including a sensor element and a circuit element with a function of driving the sensor element is known.

For example, JP-A-2005-292079 (Fig. 12) discloses a gyro sensor (piezoelectric oscillator) in which a sensor device, which includes a gyro vibrating reed as a sensor element and a semiconductor device (hereinafter, referred to as a semiconductor substrate) as a circuit element, is housed in a package.

In this configuration, the semiconductor substrate is fixed to a support substrate and is electrically connected to a lead wire section formed at the support substrate. Moreover, by being connected to a lead wire fixed to the support substrate, the sensor element (gyro vibrating reed) is disposed so as to overlap the semiconductor substrate in plan view while maintaining a gap with respect to the semiconductor substrate.

In the gyro sensor, the lead wire is made to have an elastic property in order to reduce an influence on the sensor element caused by an impact or the like applied from the outside, such that the impact applied from the outside is absorbed by the flexure.

For this reason, in the gyro sensor, it is necessary to provide a space exceeding the amount of bending of the lead wire between the semiconductor substrate and the sensor element so that the semiconductor substrate and the sensor element do not interfere with each other even if the lead wire is bent by an impact applied from the outside.

As a result, the gyro sensor has a problem in that the thickness of the sensor device increases and the total thickness increases accordingly.

EP 1 852 679 A1 shows a vibratory gyro sensor including a supporting substrate, which has a circuit element mounted thereon and a wiring pattern having a plurality of lands disposed thereon; and a vibration element mounted on a surface of the supporting substrate. The vibration element includes a base portion having a mounting surface provided with a plurality of terminals that are connected to the lands; and a vibrator portion extending integrally from a side of the base portion in a cantilever manner and having a substrate-facing surface which is flush with the mounting surface of the base portion, the substrate-facing surface being provided with a first electrode layer, a piezoelectric layer stacked on the first electrode layer, and a second electrode layer stacked on the piezoelectric layer. The vibration element is mounted on the supporting substrate by joining the terminals to the lands with metallic projections disposed there between.

### SUMMARY

An advantage of some aspects of the invention is to solve at least a part of the problems described above and the invention can be implemented as the followings forms or application examples. According to the invention, a sensor device according to claim 1, a motion sensor according to claim 5 or 6, a manufacturing method for manufacturing a sensor device according to claim 8, and a manufacturing method for manufacturing a motion sensor according to claim 11 or 12 are proposed. Dependent claims relate to preferred embodiments of the present invention.

### Application Example 1

According to this application example of the invention, there is provided a sensor device including: a semiconductor substrate; a first electrode provided at an active surface side of the semiconductor substrate; an external connection terminal provided at the active surface side so as to be electrically connected to the first electrode; a stress relief layer provided between the semiconductor substrate and the external connection terminal; a second connection terminal provided at the active surface side of the semiconductor substrate; and a sensor element including a base and a connection electrode and a vibrating section extending from the base. The sensor element is held to the semiconductor substrate by connection between the connection electrode and the external connection terminal.

In this sensor device, the second connection terminal is provided at the active surface side of the semiconductor substrate, and the external connection terminal electrically connected to the first electrode with the stress relief layer interposed there between and the connection electrode of the sensor element are connected to each other.

Accordingly, in the sensor device, connection of the semiconductor substrate to an external member using the second connection terminal is possible, and an impact or the like applied from the outside is absorbed and reduced by the stress relief layer provided between the semiconductor substrate and the external connection terminal.

As a result, since it is difficult for the impact or the like applied from the outside to be transmitted to the sensor element in the sensor device, it becomes possible to connect the external connection terminal of the semiconductor substrate directly to the sensor element without a lead wire or the like.

Therefore, since space when the amount of bending of a lead wire is taken into consideration is not necessary, the thickness of the sensor device can be reduced compared with the configuration in the related art.

According to this application example of the invention, in the sensor device, the electrical connection between the first electrode and the external connection terminal is made by a rearrangement wiring line provided at the active surface side.

In this case, in the sensor device, the position of the external connection terminal or its arrangement can be freely (arbitrarily) designed due to the rearrangement wiring line.

### Application Example 2

According to this application example of the invention, in the sensor device according to the application example 1 of the invention, it is preferable that the external connection terminal is a protruding electrode.

In this case, in the sensor device, since the external connection terminal is a protruding electrode, it becomes possible to provide a gap between the sensor element and the semiconductor substrate. Accordingly, contact between the sensor element and the semiconductor substrate can be prevented.

As a result, the sensor element can be driven stably in the sensor device.

### Application Example 3

According to this application example of the invention, there is provided a sensor device including: a semiconductor substrate; a first electrode provided at an active surface side of the semiconductor substrate; an external connection terminal provided at the active surface side so as to be electrically connected to the first electrode; a stress relief layer provided between the semiconductor substrate and the external connection terminal; a second connection terminal provided at the active surface side of the semiconductor substrate; a sensor element including a base and a connection and a vibrating section electrode extending from the base; and a plurality of leads provided at a surface side of the semiconductor substrate opposite the active surface. The second connection terminal is electrically connected to the lead, and the sensor element is held to the semiconductor substrate by connection between the connection electrode and the external connection terminal.

In this case, since the semiconductor substrate is connected to the plurality of leads in the sensor device, for example, an external force applied to the semiconductor substrate is distributed to the plurality of leads in addition to the same effects as in the sensor device according to the application example 1 of the invention.

Accordingly, it is possible to prevent the lead from being bent due to an external force even if the plate thickness of the lead in the sensor device is relatively small.

For this reason, since it is not necessary to increase the rigidity of the lead by increasing the plate thickness of the lead in the sensor device, an increase in the width of the lead, an increase in the pitch between the leads, an increase in the curvature of the corner, and the like are not necessary.

As a result, since it is not necessary to make the lead large in the sensor device, an increase in the size of the sensor device can be prevented.

Moreover, in the sensor device, the semiconductor substrate is bonded to the plurality of leads in a state positioned over the leads. This can fix each lead to a predetermined position so that the leads do not come apart.

According to this application example of the invention, in the sensor device, the electrical connection between the first electrode and the external connection terminal is made by a rearrangement wiring line provided at the active surface side.

In this case, in the sensor device, the position of the external connection terminal or its arrangement can be freely (arbitrarily) designed due to the rearrangement wiring line.

### Application Example 4

According to this application example of the invention, in the sensor device according to the application example 3 of the invention, it is preferable that the external connection terminal is a protruding electrode.

In this case, in the sensor device, since the external connection terminal is a protruding electrode, it becomes possible to provide a gap between the sensor element and the semiconductor substrate. Accordingly, contact between the sensor element and the semiconductor substrate can be prevented.

As a result, the sensor element can be driven stably in the sensor device.

### Application Example 5

According to this application example of the invention, in the sensor device according to any one of the application examples 3 or 4 of the invention, it is preferable that the lead is bent such that an angle between the lead and a principal surface of the sensor element becomes an approximate right angle.

In the sensor device, the lead is bent such that the angle between the lead and the principal surface of the sensor element becomes an approximate right angle.

Accordingly, in the sensor device, by mounting the bent lead on a surface of the package inside which is approximately parallel to the bottom surface of the package in which the sensor device is housed, for example, the angle between the bottom surface and the principal surface of the sensor element can be made to be an approximate right angle.

That is, even if the sensor device is not disposed on the side surface of the package inside which forms an approximate right angle with the bottom surface of the package, the angle between the bottom surface and the principal surface of the sensor element can be made to be an approximate right angle.

Accordingly, since it is not necessary to improve the machining accuracy of the angle between surfaces of the package, in the sensor device, a motion sensor corresponding to a plurality of axes (multiaxis), which will be described later, can be easily provided.

### Application Example 6

According to this application example of the invention, there is provided a motion sensor including: the sensor device according to any one of the application examples 1 or 2 of the invention; and a package which houses the sensor device inside. The sensor device is housed in the package.

In this case, it is possible to provide a motion sensor including a sensor device with the effects described in any one of the application examples 1 or 2 of the invention.

In addition, since a thin sensor device is used, the motion sensor can also be made thin.

### Application Example 7

According to this application example of the invention, there is provided a motion sensor including: the sensor device according to any one of the application examples 3 to 5 of the invention; and a package which houses the sensor device inside. The sensor device is housed in the package.

In this case, it is possible to provide a motion sensor including a sensor device with the effects described in any one of the application examples 3 to 5 of the invention.

In addition, since a thin sensor device is used, the motion sensor can also be made thin.

### Application Example 8

According to this application example of the invention, there is provided a motion sensor including: the plurality of sensor devices according to the application examples 3 to 5 of the invention; and a package which houses the plurality of sensor devices inside. The plurality of sensor devices is disposed and housed in the package such that an angle between principal surfaces of the sensor elements becomes an approximate right angle.

In this case, it is possible to provide a motion sensor including a plurality of sensor devices with the effects described in any one of the application examples 3 to 5 of the invention.

In addition, since each sensor device is disposed and housed in the package such that the angle between the principal surfaces of the sensor elements becomes an approximate right angle, it becomes possible to realize sensing corresponding to a plurality of axes with one motion sensor.

### Application Example 9

According to this application example of the invention, in the motion sensor according to the application example 8 of the invention, it is preferable that a principal surface of at least one of the sensor elements is approximately parallel to a connected surface which is connected to an external member of the package.

In this case, sensing corresponding to a plurality of axes including an axis approximately perpendicular to the connected surface of the package is possible with one motion sensor.

### Application Example 10

According to this application example of the invention, there is provided a method of manufacturing a sensor device including: providing a first electrode at an active surface side of a semiconductor substrate; providing a stress relief layer at the active surface side of the semiconductor substrate; providing an external connection terminal, which is electrically connected to the first electrode, on the stress relief layer; providing a second connection terminal at the active surface side of the semiconductor substrate; preparing a sensor element including a base and a connection electrode and a vibrating section extending from the base; and connecting the external connection terminal of the semiconductor substrate and the connection electrode of the sensor element to each other.

In this case, the method of manufacturing a sensor device can manufacture and provide a sensor device with the effects described in the application example 1 of the invention.

### Application Example 11

According to this application example of the invention, there is provided a method of manufacturing a sensor device including: providing a first electrode at an active surface side of a semiconductor substrate; providing a stress relief layer at the active surface side of the semiconductor substrate; providing an external connection terminal, which is electrically connected to the first electrode, on the stress relief layer; providing a second connection terminal at the active surface side of the semiconductor substrate; preparing a lead frame including a plurality of leads; connecting a surface side of the semiconductor substrate opposite the active surface to the plurality of leads in a state positioned over the leads; connecting the second connection terminal of the semiconductor substrate and the lead to each other; preparing a sensor element including a base and a connection electrode and a vibrating section extending from the base; and connecting the external connection terminal of the semiconductor substrate and the connection electrode of the sensor element to each other.

In this case, the method of manufacturing a sensor device can manufacture and provide a sensor device with the effects described in the application example 3 of the invention.

### Application Example 12

According to this application example of the invention, it is preferable that the method of manufacturing a sensor device according to the application example 11 of the invention further includes bending the lead such that an angle between the lead and a principal surface of the sensor element becomes an approximate right angle.

In this case, the method of manufacturing a sensor device can manufacture and provide a sensor device with the effects described in the application example 5 of the invention.

Moreover, in the method of manufacturing a sensor device, the semiconductor substrate is connected to the plurality of leads in a state positioned over the leads. Accordingly, a variation in the bending angle of the leads at the time of bending can be suppressed.

### Application Example 13

According to this application example of the invention, there is provided a method of manufacturing a motion sensor including: preparing a sensor device including a semiconductor substrate, a first electrode provided at an active surface side of the semiconductor substrate, an external connection terminal provided at the active surface side so as to be electrically connected to the first electrode, a stress relief layer provided between the semiconductor substrate and the external connection terminal, a second connection terminal provided at the active surface side of the semiconductor substrate, and a sensor element which includes a base and a connection electrode and a vibrating section extending from the base and which is held to the semiconductor substrate by connection between the connection electrode and the external connection terminal; preparing a package which houses the sensor device inside; and housing the sensor device in the package.

In this case, the method of manufacturing a motion sensor can manufacture and provide a motion sensor with the effects described in the application example 6 of the invention.

### Application Example 14

According to this application example of the invention; there is provided a method of manufacturing a motion sensor including: preparing a sensor device which includes a semiconductor substrate, a first electrode provided at an active surface side of the semiconductor substrate, an external connection terminal provided at the active surface side so as to be electrically connected to the first electrode, a stress relief layer provided between the semiconductor substrate and the external connection terminal, a second connection terminal provided at the active surface side of the semiconductor substrate, a sensor element including a base and a connection electrode and a vibrating section extending from the base, and a plurality of leads provided at a surface side of the semiconductor substrate opposite the active surface and in which the second connection terminal is electrically connected to the lead and the sensor element is held to the semiconductor substrate by connection between the connection electrode and the external connection terminal; preparing a package which houses the sensor device inside; and housing the sensor device in the package.

In this case, the method of manufacturing a motion sensor can manufacture and provide a motion sensor with the effects described in the application example 7 of the invention.

### Application Example 15

According to this application example of the invention, there is provided a method of manufacturing a motion sensor including: preparing a plurality of sensor devices each of which includes a semiconductor substrate, a first electrode provided at an active surface side of the semiconductor substrate, an external connection terminal provided at the active surface side so as to be electrically connected to the first electrode, a stress relief layer provided between the semiconductor substrate and the external connection terminal, a second connection terminal provided at the active surface side of the semiconductor substrate, a sensor element including a base and a connection electrode and a vibrating section extending from the base, and a plurality of leads provided at a surface side of the semiconductor substrate opposite the active surface and in which the second connection terminal is electrically connected to the lead and the sensor element is held to the semiconductor substrate by connection between the connection electrode and the external connection terminal; preparing a package which houses the plurality of sensor devices inside; and disposing and housing the plurality of sensor devices in the package such that an angle between principal surfaces of the sensor elements becomes an approximate right angle.

In this case, the method of manufacturing a motion sensor can manufacture and provide a motion sensor with the effects described in the application example 8 of the invention.

### BRIEF DESCRIPTION OF THE DRAWINGS

The invention will be described with reference to the accompanying drawings, wherein like numbers reference like elements.
Figs. 1A and 1B are views showing the schematic configuration of a sensor device according to a first embodiment, where Fig. 1A is a plan view seen from the silicon substrate side and Fig. 1B is a plan view seen from the lead side.
Fig. 2 is a cross-sectional view of Fig. 1A.
Fig. 3 is a plan view schematically illustrating an operation of a vibrating gyro element.
Figs. 4A and 4B are plan views schematically illustrating an operation of a vibrating gyro element.
Fig. 5 is a flow chart showing the process of manufacturing a sensor device.
Figs. 6A to 6C are schematic views illustrating the manufacturing process and are cross-sectional views illustrating the manufacturing process in process order.
Fig. 7 is a plan view seen from the silicon substrate side which schematically illustrates the manufacturing process.
Figs. 8A and 8B are schematic views illustrating the manufacturing process, where Fig. 8A is a plan view seen from the silicon substrate side and Fig. 8B is a cross-sectional view of Fig. 8A.
Fig. 9 is a cross-sectional view schematically showing main sections which is for explaining the manufacturing process.
Figs. 10A and 10B are views showing the schematic configuration of a sensor device according to a second embodiment, where Fig. 10A is a plan view seen from the silicon substrate side and Fig. 10B is a view seen from a direction indicated by the arrow in Fig. 10A.
Fig. 11 is a flow chart showing the process of manufacturing the sensor device according to the second embodiment.
Fig. 12 is a cross-sectional view schematically illustrating the main process.
Figs. 13A and 13B are views showing the schematic configuration of a gyro sensor according to a third embodiment, where Fig. 13A is a plan view seen from the lid side and Fig. 13B is a cross-sectional view of Fig. 13A.
Fig. 14 is a flow chart showing the process of manufacturing a gyro sensor.
Fig. 15 is a cross-sectional view schematically illustrating the manufacturing process.
Figs. 16A and 16B are schematic views illustrating the manufacturing process, where Fig. 16A is a plan view seen from the lid side and Fig. 16B is a cross-sectional view of Fig. 16A.
Figs. 17A and 17B are views showing the schematic configuration of a gyro sensor according to a fourth embodiment, where Fig. 17A is a plan view seen from the lid side and Fig. 17B is a cross-sectional view of Fig. 17A.
Figs. 18A and 18B are views showing the schematic configuration of a gyro sensor according to a fifth embodiment, where Fig. 18A is a plan view seen from the lid side and Fig. 18B is a cross-sectional view of Fig. 18A.
Figs. 19A and 19B are views showing the schematic configuration of a gyro sensor in a modification of the fifth embodiment, where Fig. 19A is a plan view seen from the lid side and Fig. 19B is a cross-sectional view of Fig. 19A.

### DESCRIPTION OF EXEMPLARY EMBODIMENTS

Hereinafter, exemplary embodiments of the present invention will be described with reference to the accompanying drawings.

### First embodiment

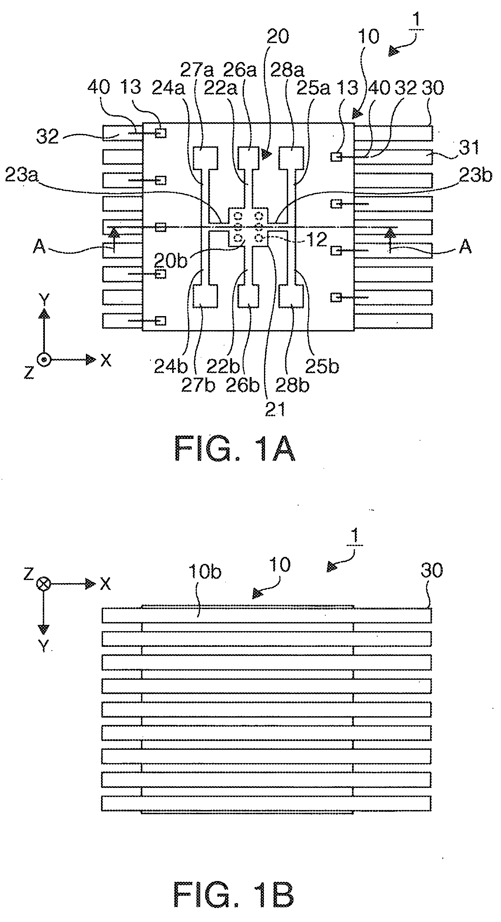

Figs. 1A and 1B are views showing the schematic configuration of a sensor device according to a first embodiment. Fig. 1A is a plan view seen from the silicon substrate side as a semiconductor substrate, and Fig. 1B is a plan view seen from the lead side.

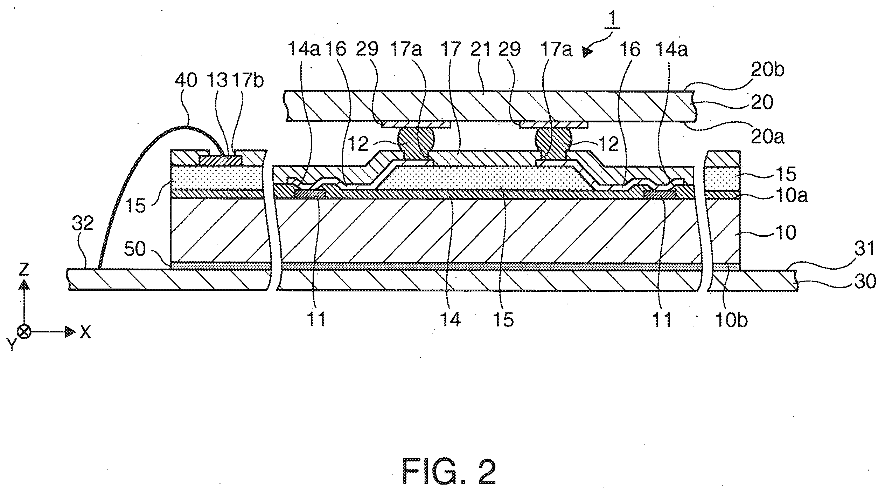

In addition, Fig. 2 is a cross-sectional view taken along the line A-A in Fig. 1A.

As shown in Figs. 1A, 1B, and 2, a sensor device 1 includes a silicon substrate 10, a vibrating gyro element (gyro vibrating reed) 20 as a sensor element, a plurality of (here, nine) leads 30, and a wire 40.

An integrated circuit (not shown) including semiconductor elements, such as a transistor or a memory element, is formed at the active surface 10a side of the silicon substrate 10. The integrated circuit includes a driving circuit for driving and vibrating the vibrating gyro element 20 and a detection circuit which detects the detection vibration occurring in the vibrating gyro element 20 when angular speed is applied.

The silicon substrate 10 includes a first electrode 11 provided at the active surface 10a side, an external connection terminal 12 provided at the active surface 10a side so as to be electrically connected to the first electrode 11, a stress relief layer 15 provided between the active surface 10a and the external connection terminal 12, and a connection terminal 13 provided at the active surface 10a side.

The first electrode 11 is formed so as to be directly electrically connected to an integrated circuit of the silicon substrate 10. In addition, a first insulating layer 14 serving as a passivation layer is formed on the active surface 10a. In the first insulating layer 14, an opening 14a is formed on the first electrode 11.

By such a configuration, the first electrode 11 is exposed to the outside in the opening 14a.

On the first insulating layer 14, the stress relief layer 15 made of insulated resin is formed at the position where the first electrode 11 or other electrodes are not present, in the present embodiment, at the middle portion of the silicon substrate 10.

In addition, a wiring line 16 as a rearrangement wiring line within the opening 14a of the first insulating layer 14 is connected to the first electrode 11. The wiring line 16 is for rearranging electrodes of the integrated circuit and is formed so as to extend from the first electrode 11, which is disposed at a predetermined portion of the silicon substrate 10, to the middle portion side and is also formed so as to be routed up to the top of the stress relief layer 15.

The wiring line 16 is generally called a rearrangement wiring line because the wiring line 16 makes a connection between the first electrode 11 of the silicon substrate 10 and the external connection terminal 12. The wiring line 16 is an important component for disposing the external connection terminal 12 by arbitrarily shifting the position of the external connection terminal 12 with respect to the first electrode 11, restrictions on the position of which are large due to design precision, and for improving the degree of freedom of the connection position on the silicon substrate 10 for connection with the vibrating gyro element 20.

In addition, a second insulating layer 17 with a heat resistant property which is made of resin and which covers the wiring line 16, the stress relief layer 15, and the first insulating layer 14 is formed at the active surface 10a side of the silicon substrate 10. In addition, the second insulating layer 17 may be a solder resist layer.

In the second insulating layer 17, an opening 17a is formed on the wiring line 16 on the stress relief layer 15. With such a configuration, the wiring line 16 is exposed to the outside in the opening 17a.

In addition, the external connection terminal 12 is provided on the wiring line 16 exposed in the opening 17a. The external connection terminal 12 is a protruding electrode which is formed in a bump shape by a solder ball, for example.

Under such an arrangement, the integrated circuit formed at the silicon substrate 10 is electrically connected to the vibrating gyro element 20 through the first electrode 11, the wiring line 16, and the external connection terminal 12.

In this case, in the sensor device 1, a gap is provided between the vibrating gyro element 20 and the silicon substrate 10 since the external connection terminal 12 is a protruding electrode.

In the integrated circuit formed at the silicon substrate 10, other electrodes (not shown) are formed in addition to the first electrode 11. Similar to the case of the first electrode 11, other electrodes are connected to rearrangement wiring lines, so that they are connected to the connection terminal 13 which is exposed to the outside in the opening 17b of the second insulating layer 17.

The connection terminal 13 has a pad shape for electrical or mechanical connection and is connected to the lead 30 through the wire 40 formed of metal, such as e.g. gold (Au) or aluminum (Al).

The first electrode 11, other electrodes, and the connection terminal 13 may be formed of e.g. titanium (Ti), titanium nitride (TiN), aluminum (Al), copper (Cu), or an alloy including at least two of them. Especially for the connection terminal 13, it is preferable to perform nickel (Ni) plating or gold (Au) plating on the surface in order to increase the bondability at the time of wire bonding.

In this way, lowering in contact and bondability caused by rust can be prevented. In addition, a top surface treatment, such as solder plating or solder precoating, may also be executed.

In addition, rearrangement wiring lines including the wiring line 16 may be formed of e.g. at least one of gold (Au), copper (Cu), silver (Ag), titanium (Ti), tungsten (W), titanium tungsten (TiW), titanium nitride (TiN), nickel (Ni), nickel vanadium (NiV), chromium (Cr), aluminum (Al), palladium (Pd), and the like.

In addition, the rearrangement wiring lines including the wiring line 16 may have not only a single layer structure using the above materials but also a laminated structure in which the plurality of kinds of materials is combined. In addition, since the rearrangement wiring lines including the wiring line 16 are generally formed by the same process, they are formed of the same material eventually.

Moreover, examples of resin used to form the first insulating layer 14 and the second insulating layer 17 may include at least one of polyimide resin, silicon-modified polyimide resin, epoxy resin, silicon-modified epoxy resin, acrylic resin, phenol resin, BCB (benzocyclobutene), PBO (polybenzoxazole), and the like.

In addition, the first insulating layer 14 may be formed from inorganic insulating materials, such as e.g. silicon oxide (SiO₂) or silicon nitride (Si₃N₄).

In addition, the stress relief layer 15 may also be formed at the outer periphery of the silicon substrate 10 where the connection terminal 13 is formed.

On the surface side (non-active surface 10b side) opposite the active surface 10a of the silicon substrate 10, a plurality of rectangular plate shaped leads 30 is bonded (connected) with a predetermined gap therebetween and so as to be approximately parallel to each other in a state insulated from the non-active surface 10b by an insulating adhesive 50.

That is, the silicon substrate 10 is connected to the plurality of leads 30 so as to be positioned over the leads 30 in plan view. In addition, the leads 30 may also be connected to the silicon substrate 10 with an insulating plate interposed therebetween.

Metal, such as copper (Cu) based alloy or iron (Fe) based alloy, are mentioned as a material that can be used for the lead 30.

A connection section 32 is formed on a connection surface 31 of each lead 30 connected to the silicon substrate 10. A metal coat, such as e.g. gold (Au) or silver (Ag), may be formed on the connection section 32.

As described above, the connection section 32 of the lead 30 is connected to the connection terminal 13 of the silicon substrate 10 by the wire 40.

In addition, the lead 30 is manufactured in the lead frame state and the frame section is cut thereafter, thereby forming one component of the sensor device 1.

The vibrating gyro element 20 is formed with crystal, which is a piezoelectric material, as a base material (material which forms a main section). The crystal has an X axis called an electrical axis, a Y-axis called a mechanical axis, and a Z axis called an optical axis.

In addition, the vibrating gyro element 20 is cut along the plane specified by the X and Y axes perpendicular to each other on the quartz crystal axis and is processed in the shape of a flat plate, and has a predetermined thickness in the Z-axis direction perpendicular to the plane. In addition, the predetermined thickness is appropriately set by the oscillation frequency (resonant frequency), the outer appearance size, workability, and the like.

Moreover, for the flat plate which forms the vibrating gyro element 20, an error of the cutting angle from the crystal may be allowed in some ranges for each of the X, Y, and Z axes. For example, one obtained by cutting using rotation in a range from 0° to 2° on the X axis may be used. The same is true for the Y and Z axes.

The vibrating gyro element 20 may be formed by etching (wet etching or dry etching) using a photolithography technique. In addition, it is possible to obtain the plurality of vibrating gyro elements 20 from one crystal wafer.

As shown in Fig. 1A, the vibrating gyro element 20 in this embodiment has a configuration called a double T type.

The vibrating gyro element 20 includes: a base 21 located at the middle; a pair of vibrating arms for detection 22a and 22b serving as vibrating sections which extends from the base 21 along the Y axis; a pair of connection arms 23a and 23b which extends from the base 21 along the X axis so as to be perpendicular to the vibrating arms for detection 22a and 22b; and a pair of vibrating arms for driving 24a and 24b and a pair of vibrating arms for driving 25a and 25b serving as vibrating sections which extend from the distal sides of the connection arms 23a and 23b along the Y axis so as to be parallel to the vibrating arms for detection 22a and 22b.

Moreover, in the vibrating gyro element 20, detection electrodes (not shown) are formed at the vibrating arms for detection 22a and 22b, and driving electrodes (not shown) are formed at the vibrating arms for driving 24a, 24b, 25a, and 25b.

In the vibrating gyro element 20, a detection vibration system which detects the angular speed is formed by the vibrating arms for detection 22a and 22b, and a driving vibration system which drives the vibrating gyro element 20 is formed by the connection arms 23a and 23b and the vibrating arms for driving 24a, 24b, 25a, and 25b.

In addition, weight sections 26a and 26b are formed at distal ends of the vibrating arms for detection 22a and 22b, respectively, and weight sections 27a, 27b, 28a, and 28b are formed at distal ends of the vibrating arms for driving 24a, 24b, 25a, and 25b, respectively.

This allows to reduce the size of the vibrating gyro element 20 and improves the detection sensitivity of the angular speed.

The vibrating gyro element 20 is disposed at the active surface 10a side of the silicon substrate 10 so as to overlap the silicon substrate 10 in plan view.

In addition, the vibrating gyro element 20 has top and bottom surfaces of the base 21 and each vibrating arm as principal surfaces. Here, a surface of the base 21 which is electrically connected to the outside is called a principal surface 20a, and a surface opposite one principal surface 20a is called the other principal surface 20b.

On one principal surface 20a of the base 21 of the vibrating gyro element 20, an extraction electrode 29 as a connection electrode pulled out from each detection electrode and each driving electrode is formed. Each extraction electrode 29 and the external connection terminal 12 of the silicon substrate 10 are electrically and mechanically connected to each other.

Thus, the vibrating gyro element 20 is held to the silicon substrate 10.

In the following, an operation of the vibrating gyro element 20 of the sensor device 1 will be described in more detail.

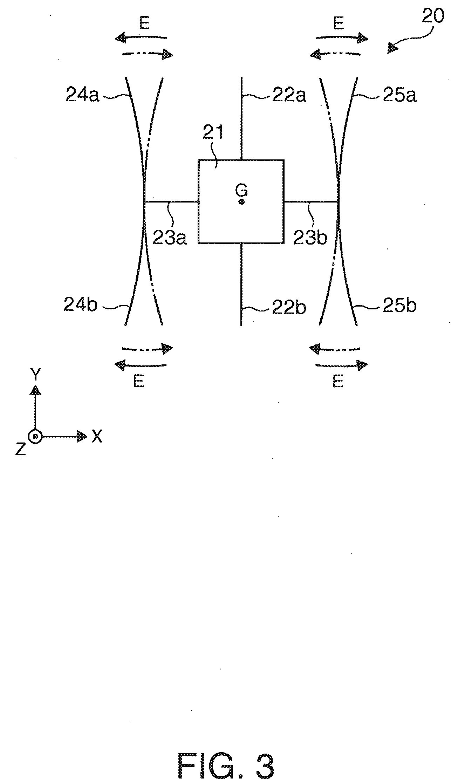

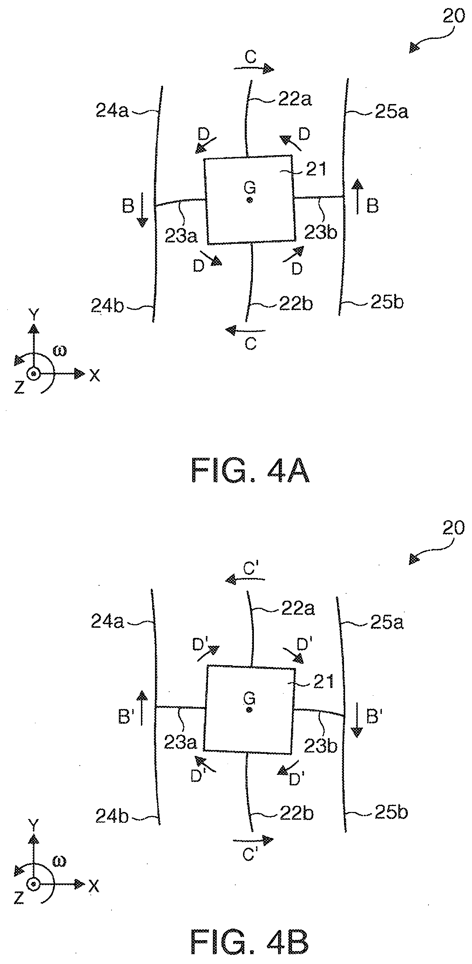

Figs. 3, 4A, and 4B are plan views schematically illustrating an operation of a vibrating gyro element. Fig. 3 shows a driving vibration state, and Figs. 4A and 4B show a detection vibration state when angular speed is applied.

Moreover, in Figs. 3, 4A, and 4B, each vibrating arm is expressed by a line in order to express a vibration state simply.

In Fig. 3, the driving vibration state of the vibrating gyro element 20 will be described.

First, a driving signal is applied from the integrated circuit (driving circuit) of the silicon substrate 10, so that the vibrating arms for driving 24a, 24b, 25a, and 25b of the vibrating gyro element 20 perform bending vibration in a direction indicated by arrow E in a state where angular speed is not applied. This bending vibration repeats a vibration mode indicated by the solid line and a vibration mode indicated by the two-dot chain line at predetermined frequencies.

Next, when the angular speed ω around the Z axis is applied to the vibrating gyro element 20 in a state where this driving vibration is performed, the vibrating gyro element 20 vibrates as shown in Figs. 4A and 4B.

First, as shown in Fig. 4A, the Coriolis force in the direction of arrow B acts on the vibrating arms for driving 24a, 24b, 25a, and 25b and the connection arms 23a and 23b which form the driving vibration system. At the same time, the vibrating arms for detection 22a and 22b deform in the direction of arrow C in response to the Coriolis force in the direction of arrow B.

Then, as shown in Fig. 4B, a force which returns in the direction of arrow B' acts on the vibrating arms for driving 24a, 24b, 25a, and 25b, and the connection arms 23a and 23b. At the same time, the vibrating arms for detection 22a and 22b deform in the direction of arrow C' in response to the force in the direction of arrow B'.

The vibrating gyro element 20 repeats the series of operations alternately to excite new vibration.

In addition, the vibration in the directions of arrows B and B' is vibration in a peripheral direction with respect to the center of gravity G. Moreover, in the vibrating gyro element 20, detection electrodes formed in the vibrating arms for detection 22a and 22b detect the distortion of crystal occurring due to vibration to thereby calculate the angular speed.

In the following, a method of manufacturing the sensor device 1 will be described.

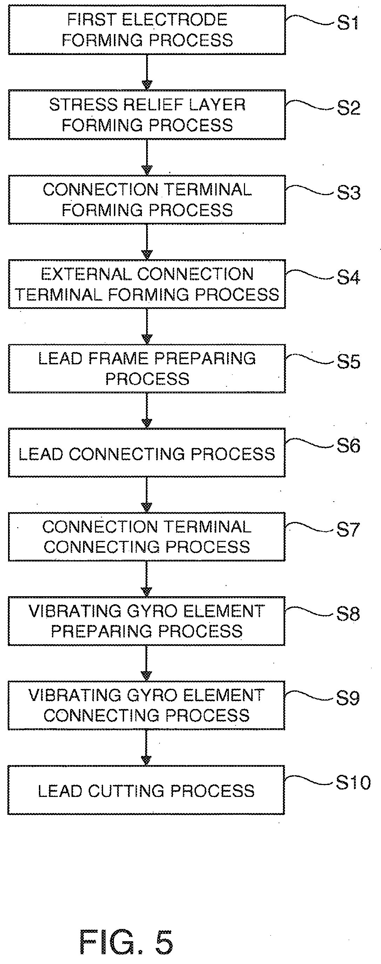

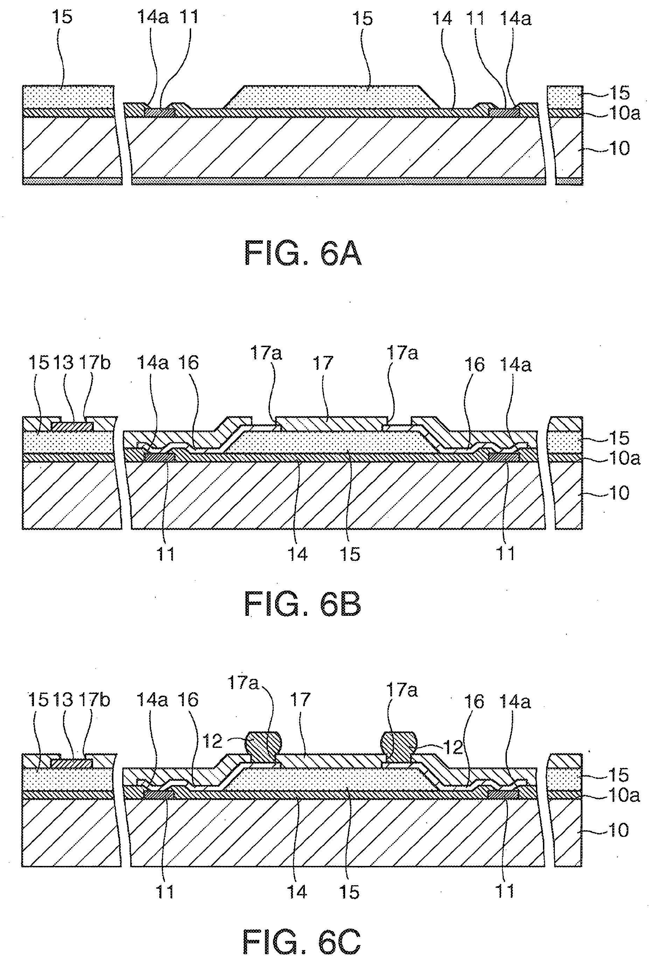

Fig. 5 is a flow chart showing the process of manufacturing a sensor device, and Figs. 6A to 9 are schematic views illustrating each manufacturing process.

Figs. 6A to 6C are cross-sectional views illustrating the process of manufacturing a silicon substrate section in process order.

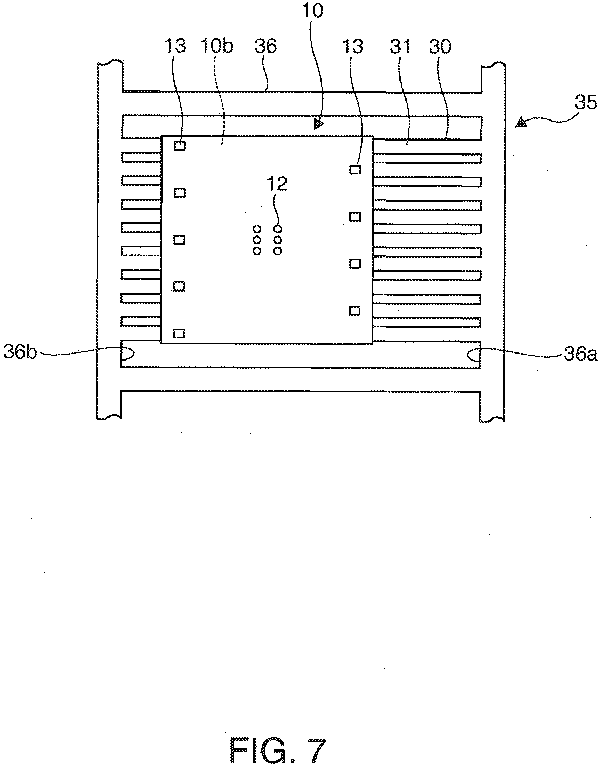

Fig. 7 is a plan view seen from the silicon substrate side.

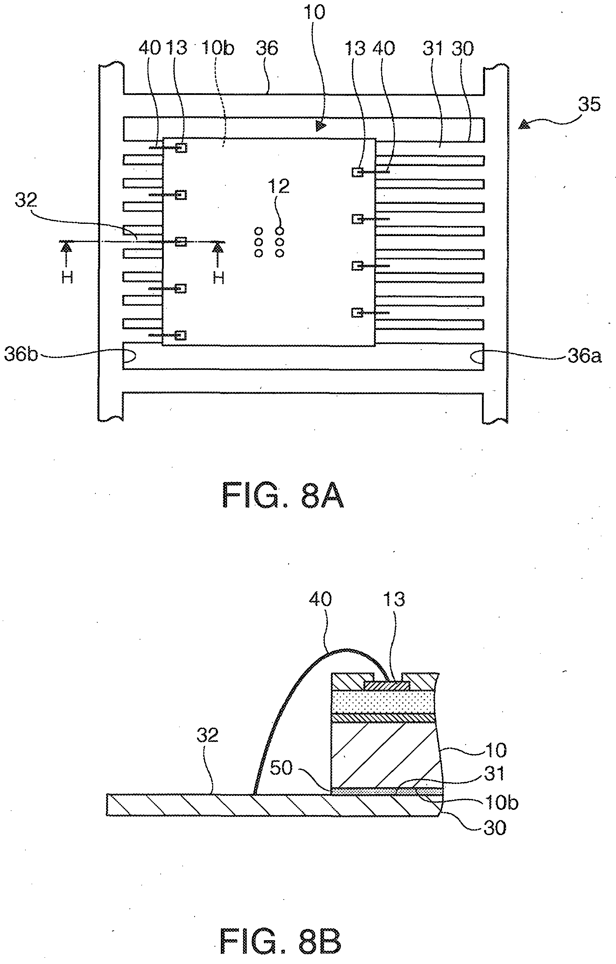

Fig. 8A is a plan view seen from the silicon substrate side, and Fig. 8B is a cross-sectional view taken along the line H-H in Fig. 8A.

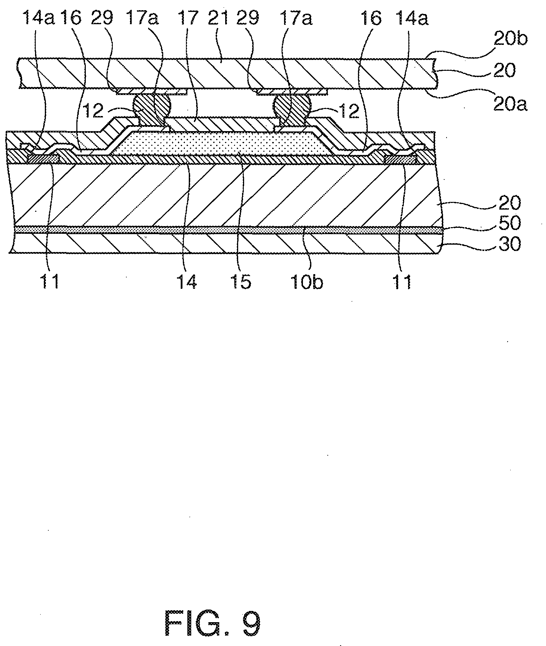

Fig. 9 is a cross-sectional view showing main sections.

As shown in Fig. 5, the method of manufacturing the sensor device 1 includes a first electrode forming process S1, a stress relief layer forming process S2, a connection terminal forming process S3, and an external connection terminal forming process S4, a lead frame preparing process S5, a lead connecting process S6, a connection terminal connecting process S7, a vibrating gyro element preparing process S8, a vibrating gyro element connecting process S9, and a lead cutting process S10.

### First electrode forming process S1

First, the silicon substrate 10 is prepared.

Then, as shown in Fig. 6A, the first electrode 11 and other electrodes (not shown) are formed at the position, which becomes a conductive section of an integrated circuit, on the active surface 10a of the silicon substrate 10.

### Stress relief layer forming process S2

Then, the first insulating layer 14 is formed on the silicon substrate 10 so as to cover the first electrode 11 and other electrodes, and a resin layer (not shown) which becomes a base of the stress relief layer 15 is formed so as to cover the first insulating layer 14.

Then, the resin layer is patterned using the known photolithography method and etching method, so that the stress relief layer 15 is formed in a predetermined shape, that is, at the middle of the silicon substrate 10 except for the position immediately above the first electrode 11 or other electrodes.

In addition, the stress relief layer 15 may also be formed at the outer periphery of the silicon substrate 10 where the connection terminal 13 is formed.

In addition, an opening 14a is formed by removing a part of the first insulating layer 14, which covers the first electrode 11 and other electrodes, using the known photolithography method and etching method. As a result, the first electrode 11 and other electrodes are exposed in the opening 14a.

### Connection terminal forming process S3

Then, as shown in Fig. 6B, the wiring line 16 connected to the first electrode 11 is formed, and a rearrangement wiring line (not shown) connected to other electrodes is formed. The wiring line 16 and the rearrangement wiring line are formed by forming conductive materials, for example, titanium tungsten (TiW) and copper (Cu) within the opening 14a in this order so as to be electrically connected to the first electrode 11 and other electrodes using a sputtering technique, patterning it in the shape of wiring lines, and laminating copper (Cu) on the obtained pattern by plating.

In particular, the distal side of the rearrangement wiring line, that is, the connection terminal 13 side is patterned in a pad shape so that this portion is made as the connection terminal 13.

Especially for the connection terminal 13, plating using e.g. nickel (Ni) or gold (Au) is performed on the surface in order to increase the bondability at the time of wire bonding. In addition, a top surface treatment, such as solder plating or solder precoating, may also be executed.

### External connection terminal forming process S4

Then, the second insulating layer 17 is formed so as to cover the wiring line 16, the rearrangement wiring line, and the connection terminal 13, and a part of the second insulating layer 17 which covers a side of the wiring line 16 opposite the first electrode 11 side is removed using the known photolithography method and etching method to thereby form the opening 17a.

As a result, the wiring line 16 is exposed in the opening 17a. At the same time, a part of the second insulating layer 17 which covers the connection terminal 13 is also removed to form the opening 17b, so that the connection terminal 13 is exposed in the opening 17b.

Then, as shown in Fig. 6C, the external connection terminal 12 is formed by disposing a solder ball, which is formed of lead free solder, for example, on the wiring line 16 exposed in the opening 17a. Moreover, instead of forming the external connection terminal 12 by disposing a solder ball, the external connection terminal 12 may be formed by printing solder paste on the wiring line 16.

In addition, since a plurality of silicon substrates 10 is generally formed on a silicon wafer, the silicon substrate 10 is obtained by dicing (cutting) the silicon wafer into pieces using a dicing apparatus.

### Lead frame preparing process S5

Then, as shown in Fig. 7, a lead frame 35 including a plurality of leads 30 is prepared.

In the lead frame 35, a frame 36 is formed so as to surround the plurality of leads 30 and the leads 30 are connected to sides 36a and 36b of the frame 36. Generally, the lead frame 35 is formed in a strip shape which continues in the vertical direction on the plane of the drawing, for example, and is formed such that a plurality of sets of leads 30 is connected thereto.

In addition, the lead frame 35 may be separately formed instead of being formed in a strip shape.

### Lead connecting process S6

Then, the non-active surface 10b of the silicon substrate 10 is connected (bonded) to the connection surface 31 so as to be crossed over the plurality of leads 30 in a state insulated from each other by the insulating adhesive 50 (refer to Figs. 8A and 8B). In addition, the silicon substrate 10 and the lead 30 may be connected to each other with an insulating plate interposed therebetween.

### Connection terminal connecting process S7

Then, as shown in Figs. 8A and 8B, the connection terminal 13 of the silicon substrate 10 and the connection section 32 of the lead 30 are connected to each other by the wire 40 using a wire bonding method.

### Vibrating gyro element preparing process S8

Then, the vibrating gyro element 20 with the above-described configuration which is obtained as an individual piece from the crystal wafer is prepared.

### Vibrating gyro element connecting process S9

Then, as shown in Fig. 9, the vibrating gyro element 20 is placed on the silicon substrate 10, and the external connection terminal 12 of the silicon substrate 10 is connected to the extraction electrode 29 on one principal surface 20a of the base 21 of the vibrating gyro element 20.

### Lead cutting process S10

Then, each lead 30 is cut from the sides 36a and 36b (refer to Fig. 7) of the lead frame 35. As a result, the sensor device 1 shown in Fig. 1 is obtained.

In addition, the connection terminal connecting process S7 may be performed after the vibrating gyro element connecting process S9 or may be performed after the lead cutting process S10.

In addition, since the vibrating gyro element preparing process S8 needs to be performed before the vibrating gyro element connecting process S9, the vibrating gyro element preparing process S8 may be performed between processes before the vibrating gyro element connecting process S9 or may be performed first.

In addition, the vibrating gyro element connecting process S9 may also be performed before the lead connecting process S6.

As described above, the sensor device 1 according to the first embodiment has the connection terminal 13 provided at the active surface 10a side of the silicon substrate 10, and the external connection terminal 12 electrically connected to the first electrode 11 with the stress relief layer 15 interposed therebetween is connected to the extraction electrode 29 of the base 21 of the vibrating gyro element 20.

Accordingly, in the sensor device 1, connection between the silicon substrate 10 and the lead 30 (external member) using the connection terminal 13 is possible, and an impact or the like applied from the outside is absorbed and reduced by the stress relief layer 15 provided between the silicon substrate 10 and the external connection terminal 12.

As a result, since it is difficult for the impact or the like applied from the outside to be transmitted to the vibrating gyro element 20 in the sensor device 1, it becomes possible to connect the external connection terminal 12 of the silicon substrate 10 directly to the vibrating gyro element 20 without a lead wire or the like in the related art.

In this case, since a space when the amount of bending of a lead wire is taken into consideration is not necessary, the thickness of the sensor device 1 can be reduced compared with the configuration in the related art.

Moreover, in the sensor device 1, since electrical connection between the first electrode 11 and the external connection terminal 12 is made by a rearrangement wiring line (for example, the wiring line 16) provided at the active surface 10a side of the silicon substrate 10, the position of the external connection terminal 12 or its arrangement can be freely (arbitrarily) designed due to the rearrangement wiring line.

Moreover, in the sensor device 1, it becomes possible to provide a gap between the vibrating gyro element 20 and the silicon substrate 10 because the external connection terminal 12 is a protruding electrode. Accordingly, contact between the vibrating gyro element 20 and the silicon substrate 10 can be prevented.

As a result, the vibrating gyro element 20 can be driven stably in the sensor device 1.

Moreover, in the sensor device 1, the silicon substrate 10 is connected to the plurality of leads 30 in a state positioned over the leads 30. Accordingly, for example, an external force applied to the silicon substrate 10 is distributed to the plurality of leads 30.

As a result, it is possible to prevent the lead 30 from being bent due to an external force even if the plate thickness of the lead 30 is relatively small in the sensor device 1.

For this reason, since it is not necessary to increase the rigidity of the lead 30 by increasing the plate thickness of the lead 30 in the sensor device 1, an increase in the width of the lead 30, an increase in the pitch between the leads 30, an increase in the curvature of the corner, and the like are not necessary.

As a result, since it is not necessary to make the lead 30 large in the sensor device 1, an increase in the size of the sensor device 1 can be prevented.

Moreover, in the sensor device 1, the silicon substrate 10 is bonded to the plurality of leads 30 in a state positioned over the leads 30. This can fix each lead 30 to a predetermined position so that the leads 30 do not come apart.

In addition, a method of manufacturing the sensor device 1 can manufacture and provide the sensor device 1 with the effects described above.

Moreover, in the embodiment described above, the leads 30 are formed to protrude from the silicon substrate 10 to both of left and right sides on the plane of the drawing. However, the leads 30 may be formed to protrude to one of the left and right sides on the plane of the drawing by collectively forming the connection terminals 13 of the silicon substrate 10 and the connection sections 32 of the leads 30 at one of the left and right sides on the plane of the drawing.

In this case, since the length of the lead 30 can be shortened in the sensor device 1, it is possible to shorten the length of the sensor device 1 in the horizontal direction on the plane of the drawing (direction in which the lead 30 extends). In addition, this form is also applied to the following embodiments.

Moreover, in the sensor device 1, the leads 30 may not be connected to the silicon substrate 10. This will be described later. In this case, in the sensor device 1, the silicon substrate 10 and an external member may be connected without the lead 30.

In addition, the extraction electrode 29 as a connection electrode may be formed in a portion other than the base 21.

For example, the vibrating gyro element 20 may include a support section (not shown) extending from the base 21, and the extraction electrodes 29 pulled out from each detection electrode and each driving electrode described above may be formed in the support section.

In addition, the vibrating gyro element 20 may be configured such that each extraction electrode 29 of the support section and the external connection terminal 12 of the silicon substrate 10 are electrically and mechanically connected to each other and may be held to the silicon substrate 10.

In addition, this form may also be applied to the following embodiments.

### Second embodiment

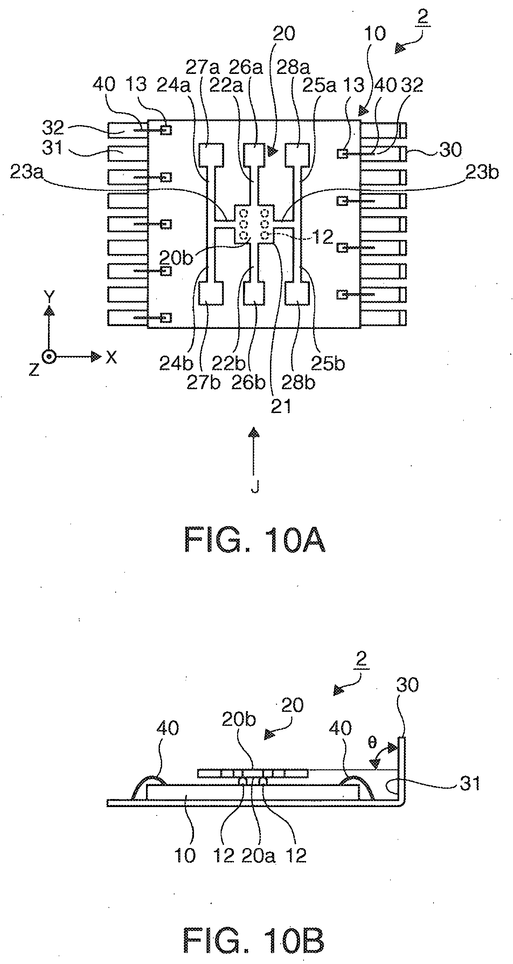

Figs. 10A and 10B are views showing the schematic configuration of a sensor device 2 according to a second embodiment. Fig. 10A is a plan view seen from the silicon substrate side, and Fig. 10B is a view seen from a direction indicated by arrow J in Fig. 10A. In addition, sections in common with the first embodiment are denoted by the same reference numerals, and the explanation will be omitted and the following explanation will be focused on different sections from the first embodiment. Moreover, in Figs. 10A and 10B, some portions are omitted or simplified for the sake of simplicity.

As shown in Figs. 10A and 10B, in a sensor device 2, a lead 30 is bent such that the angle θ between a connection surface 31 connected to a silicon substrate 10 and one principal surface 20a or the other principal surface 20b of a vibrating gyro element 20 becomes an approximate right angle.

Here, a method of manufacturing the sensor device 2 will be described.

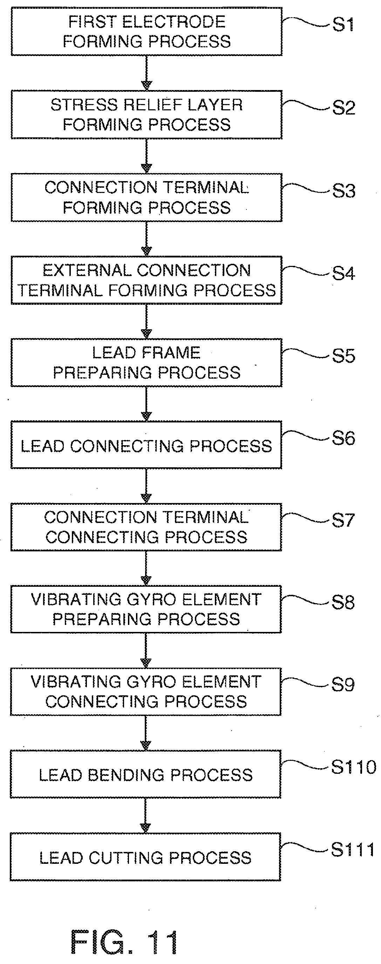

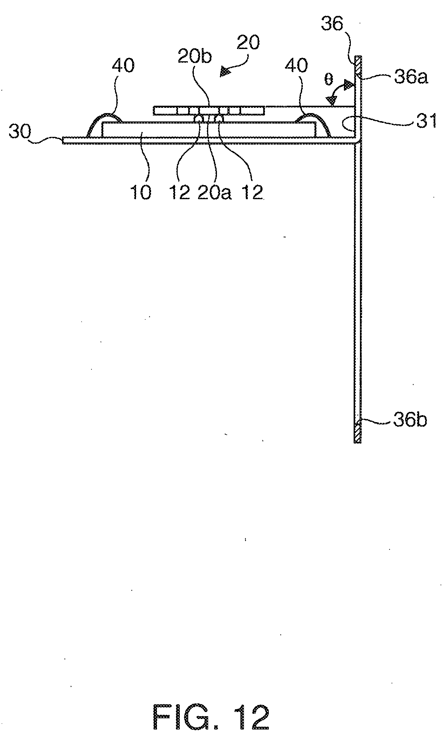

Fig. 11 is a flow chart showing the process of manufacturing the sensor device according to the second embodiment, and Fig. 12 is a cross-sectional view schematically illustrating the main process. In addition, Fig. 12 is a cross-sectional view in a state where a frame section provided at the front side of the sensor device on the plane of the drawing is cut. Moreover, in Fig. 12, some portions are omitted or simplified for the sake of simplicity.

As shown in Fig. 11, compared to the process described with reference to Fig. 5, in the method of manufacturing the sensor device 2, a lead bending process S110 is added to the process of manufacturing the sensor device 1 as shown in Fig. 5 and the lead cutting process S111 is slightly different.

### Lead bending process S110

A side of each lead 30 located at the side 36b (refer to Fig. 7) is cut after the lead connecting process S6, for example, after the vibrating gyro element connection process S9.

Then, as shown in Fig. 12, each lead 30 is bent to the connection surface 31 side such that the angle θ between the connection surface 31 of each lead 30, to which the silicon substrate 10 is connected, and one principal surface 20a or the other principal surface 20b of the vibrating gyro element 20 becomes an approximate right angle.

### Lead cutting process S111

Then, a side of each lead 30 located at the side 36a (refer to Fig. 12) is cut to obtain the sensor device 2 shown in Figs. 10A and 10B.

As described above, in the sensor device 2 according to the second embodiment, the lead 30 is bent such that the angle θ between the connection surface 31 connected to the silicon substrate 10 and one principal surface 20a or the other principal surface 20b of the vibrating gyro element 20 becomes an approximate right angle.

Therefore, by mounting the bent lead 30 on a surface of the package inside which is approximately parallel to the bottom surface of the package in which the sensor device 2 is housed, for example, the angle between the bottom surface and one principal surface 20a or the other principal surface 20b of the vibrating gyro element 20 can be made to be an approximate right angle in the sensor device 2.

That is, even if a sensor device, such as the sensor device 1, is not disposed on the side surface of the package inside which forms an approximate right angle with the bottom surface of the package, the angle between the bottom surface and one principal surface 20a or the other principal surface 20b of the vibrating gyro element 20 can be made to be an approximate right angle in the sensor device 2.

Accordingly, since it is not necessary to improve the machining accuracy of the angle between surfaces of a package, in the sensor device 2, a motion sensor corresponding to a plurality of axes (multiaxis), which will be described later, can be easily provided.

In addition, a method of manufacturing the sensor device 2 can manufacture and provide the sensor device 2 with the effects described above.

Moreover, in the method of manufacturing the sensor device 2, the silicon substrate 10 is connected to the plurality of leads 30 in a state positioned over the leads 30. Accordingly, a variation in the bending angle of the leads 30 at the time of bending can be suppressed.

In addition, although the lead 30 is bent to the connection surface 31 side in the sensor device 2, the lead 30 may be bent to the opposite side.

### Third embodiment

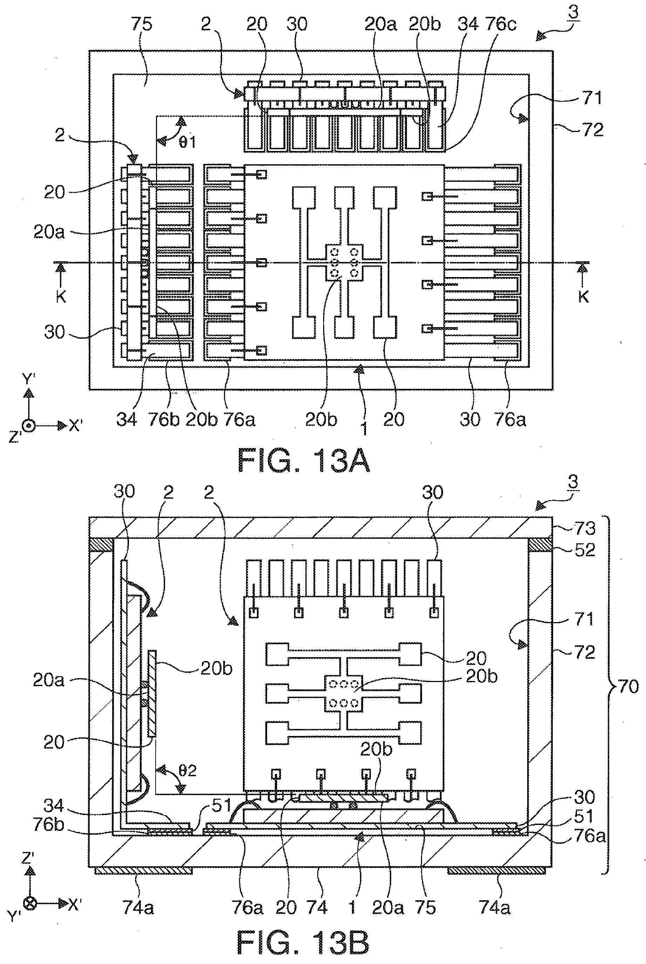

Figs. 13A and 13B are views showing the schematic configuration of a gyro sensor as a motion sensor according to a third embodiment. Fig. 13A is a plan view seen from the lid side, and Fig. 13B is a cross-sectional view taken along the line K-K in Fig. 13A.

Moreover, in the plan view, a lid is omitted for the sake of convenience. Moreover, in the cross-sectional view, some portions are omitted or simplified for the sake of simplicity.

In addition, sections in common with the first and/or second embodiments are denoted by the same reference numerals, and the explanation will be omitted and the following explanation will be focused on different sections from the first and second embodiments.

As shown in Figs. 13A and 13B, a gyro sensor 3 as a motion sensor includes one sensor device 1 (according to the sensor device of the first embodiment described above and as shown in Figs. 1A, 1B and 2), two sensor devices 2 (according to the sensor device of the second embodiment described above and as shown in Figs. 10A and 10B), and a package 70 with approximately a rectangular parallelepiped shape in which each sensor device is housed. Each sensor device is disposed and housed inside the package 70.

The package 70 is configured to include a package base 72 with a recess 71 and a lid 73 which cover the recess 71.

For the package base 72, an aluminum oxide-based sintered compact obtained by molding and laminating a ceramic green sheet and then baking it is used, for example. In addition, metals such as e.g. Kovar, glass, ceramic, and the like may be used for the lid 73.

In the sensor device 1, one principal surface 20a or the other principal surface 20b of the vibrating gyro element 20 and a bottom surface 74 as a connected surface, which is connected to an external member of the package 70, are disposed and housed inside the package 70 so as to be approximately parallel.

Specifically, in the sensor device 1, both ends of each lead 30 are fixed to internal electrodes 76a formed at the inside bottom surface 75, which is approximately parallel to the bottom surface 74 of the package base 72, of the recess 71 of the package base 72 by an electrically conductive bonding material 51, such as electrically conductive adhesive or solder.

Accordingly, the sensor device 1 is electrically connected to the internal electrode 76a.

The two sensor devices 2 are disposed and housed inside the package 70 such that the angle θ1 between the one principal surfaces 20a or the other principal surfaces 20b of the vibrating gyro elements 20 becomes an approximate right angle and the angle θ2 between one principal surface 20a or the other principal surface 20b of each vibrating gyro element 20 and one principal surface 20a or the other principal surface 20b of the vibrating gyro element 20 of the sensor device 1 becomes an approximate right angle.

Specifically, in one of the two sensor devices 2, one end 34 of each lead 30 is fixed to an internal electrode 76b, which is aligned in the same direction as the alignment direction of the internal electrode 76a on the inside bottom surface 75 of the package base 72, by the bonding material 51. In the other sensor device 2, one end 34 of each lead 30 is fixed to an internal electrode 76c, which is aligned in a direction perpendicular to the alignment direction of the internal electrode 76a, by the bonding material 51.

Accordingly, the two sensor devices 2 are disposed on the inside bottom surface 75 of the package base 72 similar to the sensor device 1 and are electrically connected to the internal electrodes 76b and 76c.

Moreover, in the sensor devices, the angles θ1 and θ2 between the one principal surfaces 20a or the other principal surfaces 20b of the vibrating gyro elements 20 are approximately right angles.

A plurality of external terminals 74a, which is used when mounted in an external device (external member) or the like, is formed on the bottom surface 74 of the package base 72.

Internal electrodes 76a, 76b, and 76c are connected to the external terminals 74a or the like by internal wiring lines (not shown).

As a result, in the gyro sensor 3, the external terminal 74a, each internal electrode, and each sensor device are electrically connected to each other.

In addition, the external terminal 74a and each internal electrode are metal coated layers obtained by laminating each coat, such as e.g. nickel (Ni) or gold (Au), on a metallization layer, such as e.g. tungsten (W), by plating or the like.

In the gyro sensor 3, the lid 73 is bonded to the package base 72 by a bonding member 52, such as e.g. a seam ring or low-melting-point glass, in a state where each sensor device is disposed and housed as described above in the package base 72.

Accordingly, the inside of the package 70 is sealed airtight. Moreover, it is preferable that the inside of the package 70 has a vacuum state (i.e. a state where the vacuum level inside the package 70 is high) so that vibration of the vibrating gyro element 20 of each sensor device is not obstructed.

Here, the outline of an operation of the gyro sensor 3 will be described.

Here, it is assumed that the bottom surface 74 of the package 70 (package base 72) is parallel to the X' and Y' axes from the X', Y', and Z' axes, which are three axes perpendicular to each other, and is perpendicular to the Z' axis.

In this case, when the posture of the gyro sensor 3 changes by an external force or the like and angular speed is applied, the sensor device 1 housed in the package 70 such that one principal surface 20a or the other principal surface 20b of the vibrating gyro element 20 and the bottom surface 74 of the package 70 are approximately parallel to each other detects an angular speed with respect to the Z' axis since one principal surface 20a or the other principal surface 20b of the vibrating gyro element 20 is approximately perpendicular to the Z' axis.

On the other hand, between the two sensor devices 2 housed inside the package 70 such that the angle θ1 between the one principal surfaces 20a or the other principal surfaces 20b of the vibrating gyro elements 20 becomes an approximate right angle and the angle θ2 between one principal surface 20a or the other principal surface 20b of each vibrating gyro element 20 and one principal surface 20a or the other principal surface 20b of the vibrating gyro element 20 of the sensor device 1 becomes an approximate right angle, one sensor device 2 detects an angular speed with respect to the X' axis since one principal surface 20a or the other principal surface 20b of the vibrating gyro element 20 is approximately perpendicular to the X' axis and the other sensor device 2 detects an angular speed with respect to the Y' axis since one principal surface 20a or the other principal surface 20b of the vibrating gyro element 20 is approximately perpendicular to the Y' axis.

Accordingly, angular speeds with respect to the X', Y', and Z' axes, which are three axes perpendicular to each other, can be detected using one gyro sensor 3.

For this reason, the gyro sensor 3 can be used for correction of hand shaking in an imaging apparatus, posture detection and posture control of a vehicle or the like, in a mobile object navigation system using a GPS (Global Positioning System) satellite signal, and the like.

In the following, a method of manufacturing the gyro sensor 3 will be described in more detail.

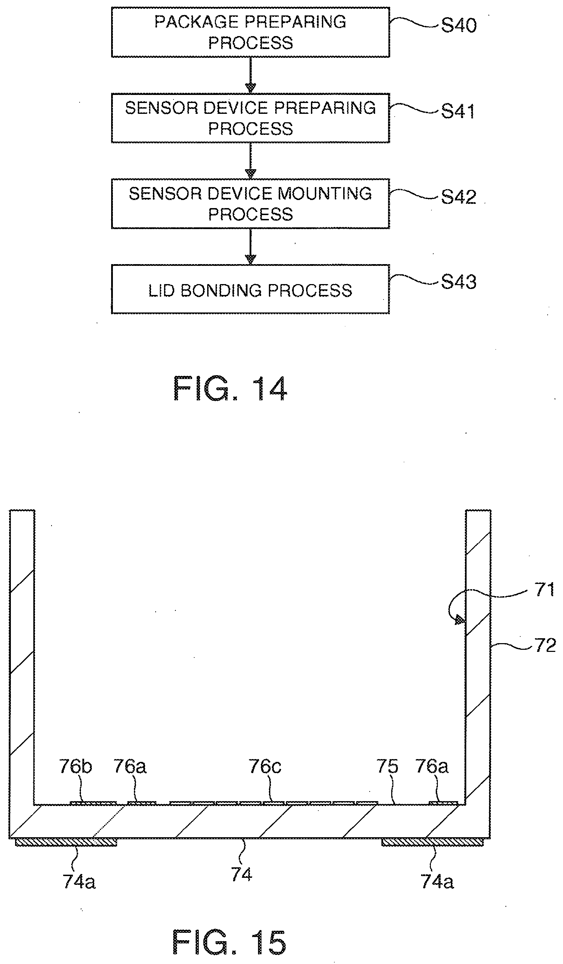

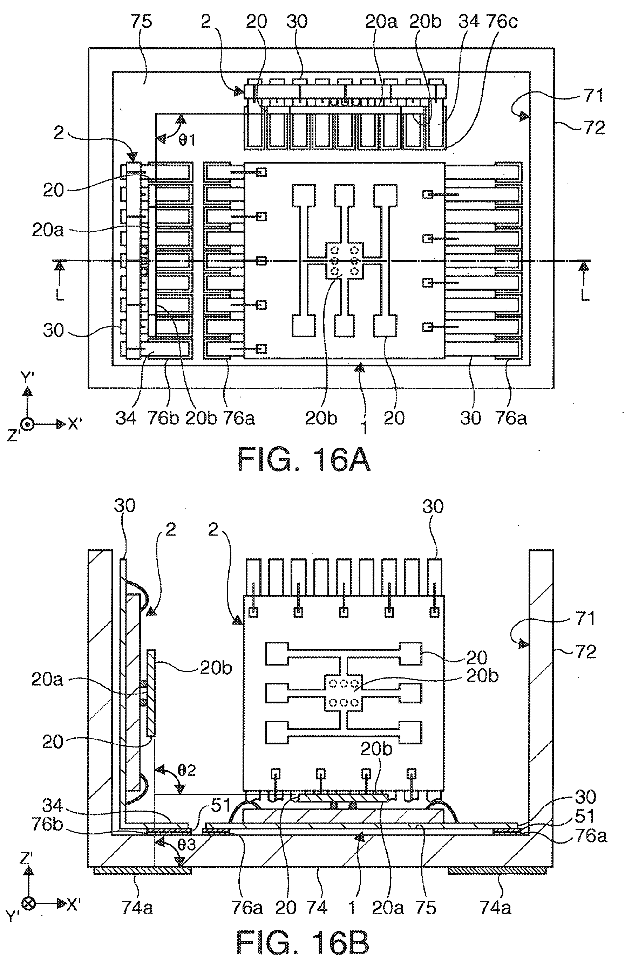

Fig. 14 is a flow chart showing the process of manufacturing a gyro sensor, and Figs. 15, 16A, and 16B are schematic views illustrating each manufacturing process.

Fig. 15 is a cross-sectional view, and the cross-sectional position is the same as that in Fig. 13B.

Fig. 16A is a plan view seen from the lid side, and Fig. 16B is a cross-sectional view taken along the line L-L in Fig. 16A.

As shown in Fig. 14, the method of manufacturing the gyro sensor 3 includes a package preparing process S40, a sensor device preparing process S41, a sensor device mounting process S42, and a lid bonding process S43.

### Package preparing process S40

First, as shown in Fig. 15, the package base 72 of the package 70 in which each sensor device is housed is prepared. Moreover, although the lid 73 may be prepared in this process, the lid 73 may be prepared up until the lid bonding process S43 which will be described later.

### Sensor device preparing process S41

Then, one sensor device 1 and two sensor devices 2 are prepared. For details, please refer to the processes described above with reference to Figs. 5 and 11.

### Sensor device mounting process S42

Then, as shown in Figs. 16A and 16B, in the sensor device 1, both ends of the lead 30 are fixed to the internal electrodes 76a of the inside bottom surface 75 of the package base 72 by the bonding member 51 such that one principal surface 20a or the other principal surface 20b of the vibrating gyro element 20 is approximately parallel to the bottom surface 74 of the package base 72.

Then, regarding the two sensor devices 2, one end 34 of the lead 30 is fixed to the internal electrode 76b of the inside bottom surface 75 in one of the sensor devices 2 and fixed to the internal electrode 76c of the inside bottom surface 75 in the other sensor device 2 such that the angle θ1 between the one principal surfaces 20a or the other principal surfaces 20b of the vibrating gyro elements 20 becomes an approximate right angle and the angle θ2 between one principal surface 20a or the other principal surface 20b of each vibrating gyro element 20 and one principal surface 20a or the other principal surface 20b of the vibrating gyro element 20 of the sensor device 1 becomes an approximate right angle.

In other words, one end 34 of the lead 30 is fixed to the internal electrode 76b of the package base 72 in one of the sensor devices 2 and fixed to the internal electrode 76c in the other sensor device 2 such that the angle θ3 between one principal surface 20a or the other principal surface 20b of each vibrating gyro element 20 and the bottom surface 74 of the package base 72 becomes an approximate right angle.

Thus, each sensor device is disposed and housed in the package base 72 (package 70).

### Lid bonding process S43

Then, referring back to Figs. 13A and 13B, the lid 73 is bonded to the package base 72 by the bonding member 52 in a vacuum state (i.e. a state where the vacuum level is high), and the inside of the package 70 is sealed airtight. Accordingly, the inside of the package 70 has a vacuum state.

Through each process and the like described above, the gyro sensor 3 shown in Figs. 13A and 13B can be obtained.

In addition, the package preparing process S40 and the sensor device preparing process S41 may be performed in reverse order.

As described above, since the gyro sensor 3 according to the third embodiment includes the sensor device 1 according to the first embodiment and the sensor device 2 according to the second embodiment, it is possible to provide a gyro sensor including sensor devices with the same effects as in the first and second embodiments.

In addition, the gyro sensor 3 has three sensor devices and is housed inside the package 70 such that the angles θ1 and θ2 between the one principal surfaces 20a or the other principal surfaces 20b of the vibrating gyro elements 20 are approximately right angles.

Therefore, according to the gyro sensor 3, sensing corresponding to three axes perpendicular to each other can be realized with one gyro sensor.

Moreover, in the gyro sensor 3, these three axes can be set as the Z' axis, which is approximately perpendicular to the bottom surface 74 of the package 70, and the X' and Y' axes, which are approximately parallel to the bottom surface 74 of the package 70 and which are perpendicular to each other.

In addition, the angles θ1 and θ2 between the one principal surfaces 20a or the other principal surfaces 20b of the vibrating gyro elements 20 of each sensor device can be made to be approximately right angles by fixing both ends of the lead 30 of the sensor device 1 to the inside bottom surface 75, which is approximately parallel to the bottom surface 74 of the package 70, and fixing one end 34 of the bent lead 30 of each sensor device 2 to the internal electrodes 76b and 76c, of which alignment directions are perpendicular to each other, on the same inside bottom surface 75.

As a result, compared with a case where three sensor devices 1 are disposed and fixed to respective surfaces of the package 70, it is possible to eliminate a work, such as changing the posture of the package 70 for every sensor device, when mounting each sensor device in the gyro sensor 3. Therefore, the number of mounting processes can be reduced.

Moreover, in the gyro sensor 3, each sensor device can be mounted on the inside bottom surface 75 which is the same surface in the package 70. Therefore, compared with a case where three sensor devices 1 are mounted on the respective surfaces in the package 70, variations in the angles θ1 and 92 between the one principal surfaces 20a or the other principal surfaces 20b of the vibrating gyro elements 20 of each sensor device do not depend on the machining accuracy of the package 70.

Accordingly, since it is not necessary to improve the machining accuracy, such as the angle between surfaces of the package 70, in the gyro sensor 3, a gyro sensor corresponding to three axes can be easily provided.

In addition, a method of manufacturing the gyro sensor 3 can manufacture and provide the gyro sensor 3 with the effects described above.

### Fourth embodiment

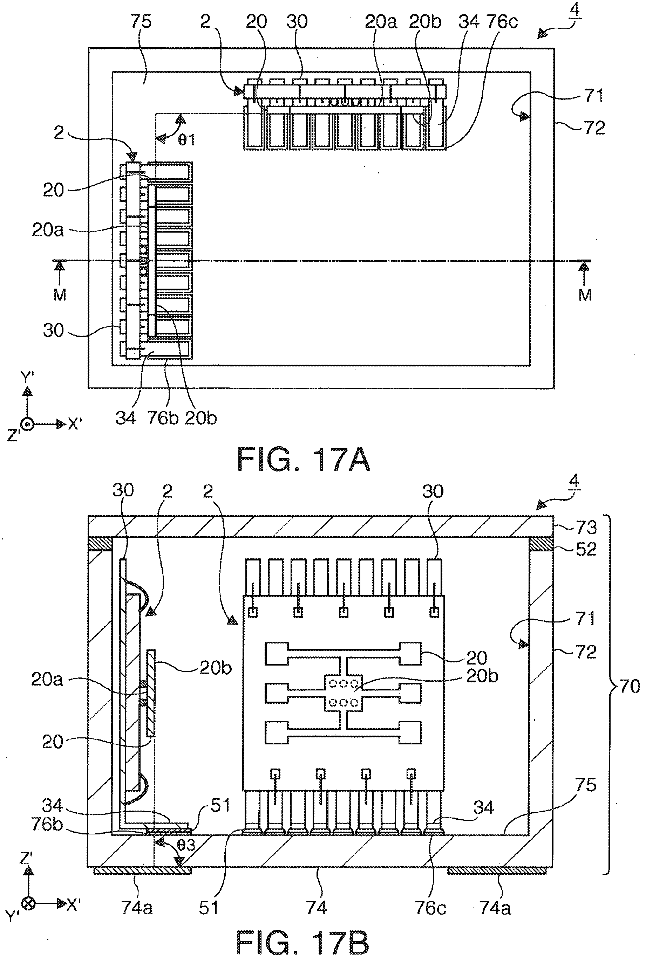

Figs. 17A and 17B are views showing the schematic configuration of a gyro sensor as a motion sensor according to a fourth embodiment. Fig. 17A is a plan view seen from the lid side, and Fig. 17B is a cross-sectional view taken along the line M-M in Fig. 17A. Moreover, in the plan view, a lid is omitted for the sake of convenience.

In addition, sections in common with the third embodiment are denoted by the same reference numerals, and the explanation will be omitted and the following explanation will be focused on different sections from the third embodiment.

As shown in Figs. 17A and 17B, when a gyro sensor 4 as a motion sensor is compared with the gyro sensor 3 according to the third embodiment, the sensor device 1 is not mounted.

Accordingly, in the gyro sensor 4, components related to the sensor device 1, such as the internal electrode 76a of the package 70, are not necessary.

In addition, one end 34 of the lead 30 is fixed to the internal electrode 76b of the inside bottom surface 75 of the package base 72 in one of the two sensor devices 2 and fixed to the internal electrode 76c of the inside bottom surface 75 in the other sensor device 2 such that the angle θ3 between one principal surface 20a or the other principal surface 20b of each vibrating gyro element 20 and the bottom surface 74 of the package base 72 becomes an approximate right angle.

As described above, since the gyro sensor 4 according to the fourth embodiment includes twice the sensor device 2 according to the second embodiment, it is possible to provide a gyro sensor including a sensor device with the same effects as in the second embodiment.

Moreover, according to the gyro sensor 4 of the fourth embodiment, since the angle θ1 between the one principal surfaces 20a or the other principal surfaces 20b of the vibrating gyro elements 20 of each sensor device 2 is an approximate right angle, sensing corresponding to two axes which are perpendicular to each other can be realized with one gyro sensor.

Moreover, in the gyro sensor 4, the angle θ1 between the one principal surfaces 20a or the other principal surfaces 20b of the vibrating gyro elements 20 of each sensor device 2 can be made to be approximately right angles since one end 34 of the lead 30 of each sensor device 2 is fixed to the internal electrodes 76b and 76c, of which alignment directions are perpendicular to each other, on the same surface (inside bottom surface 75) in the package 70.

Therefore, in the gyro sensor 4, the same effects as in the third embodiment can be obtained when mounting each sensor device 2.

Moreover, in the gyro sensor 4, each sensor device 2 is housed in the package 70 such that the angle θ3 between one principal surface 20a or the other principal surface 20b of each vibrating gyro element 20 and the bottom surface 74 of the package 70 becomes an approximate right angle.

Therefore, according to the gyro sensor 4, sensing corresponding to the two X' and Y' axes which are approximately parallel to the bottom surface 74 of the package 70 and are perpendicular to each other can be realized with one gyro sensor.

In addition, the method of manufacturing the gyro sensor 4 is based on the method of manufacturing the gyro sensor 3 and includes the package preparing process S40, the sensor device preparing process S41, the sensor device mounting process S42, and the lid bonding process S43 (refer to Fig. 14).

In the method of manufacturing the gyro sensor 4, two sensor devices 2 are prepared and then disposed and housed inside the package base 72 (package 70) such that the positional relationship described above is satisfied, in the sensor device preparing process S41 and the sensor device mounting process S42.

In this case, the method of manufacturing the gyro sensor 4 can manufacture and provide the gyro sensor 4 with the effects described above.

### Fifth embodiment

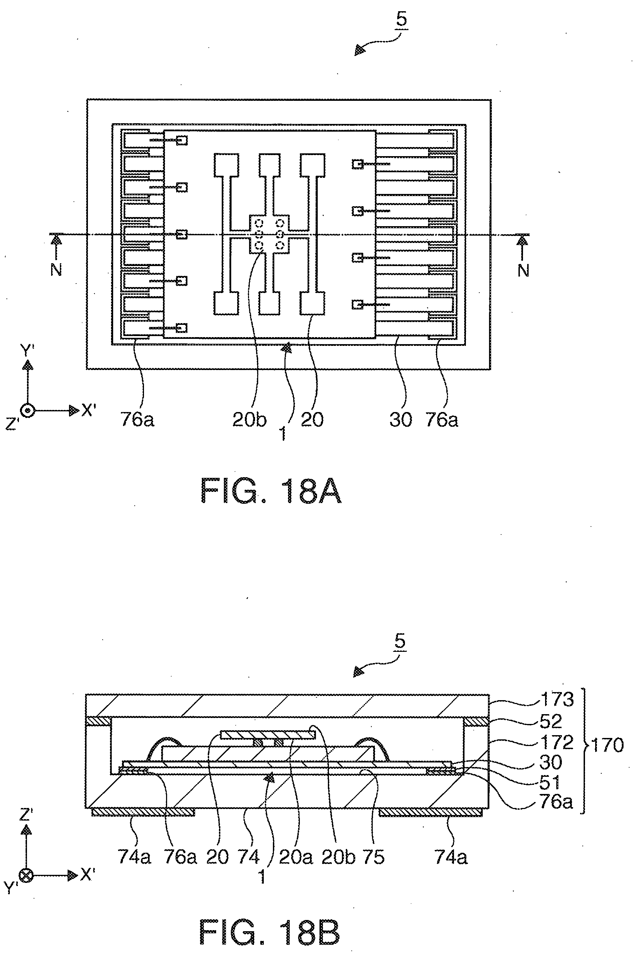

Figs. 18A and 18B are views showing the schematic configuration of a gyro sensor as a motion sensor according to a fifth embodiment. Fig. 18A is a plan view seen from the lid side, and Fig. 18B is a cross-sectional view taken along the line N-N in Fig. 18A. Moreover, in the plan view, a lid is omitted for the sake of convenience.

In addition, sections in common with the third embodiment are denoted by the same reference numerals, and the explanation will be omitted and the following explanation will be focused on different sections from the third embodiment.

As shown in Figs. 18A and 18B, when a gyro sensor 5 as a motion sensor is compared with the gyro sensor 3 according to the third embodiment, two sensor devices 2 are not mounted.

Accordingly, in the gyro sensor 5, components related to the two sensor devices 2, such as a space for arrangement of the two sensor devices 2 and the internal electrodes 76b and 76c, are not necessary.

Accordingly, since the planar size of a package base 172 and a lid 173 of a package 170 can be reduced, the thickness of the gyro sensor 5 can be reduced.

The thickness of the package 170 can be reduced compared with a case where a sensor device in the related art is used because the sensor device 1 of the gyro sensor 5 is made thin compared with the sensor device in the related art.

Therefore, according to the gyro sensor 5, it is possible to provide a gyro sensor in which sensing corresponding to the one Z' axis perpendicular to the bottom surface 74 of the package 170 is possible and whose planar size and total thickness are smaller than those in the gyro sensor 3 according to the third embodiment.

In addition, since the gyro sensor 5 according to the fifth embodiment includes the sensor device 1 according to the first embodiment, it is possible to provide a gyro sensor including a sensor device with the same effects as in the first embodiment.

In addition, a method of manufacturing the gyro sensor 5 is based on the method of manufacturing the gyro sensor 3 and includes the package preparing process S40, the sensor device preparing process S41, the sensor device mounting process S42, and the lid bonding process S43 (refer to Fig. 14).

In the method of manufacturing the gyro sensor 5, one sensor device 1 is prepared and then disposed and housed inside the package base 172 (package 170) in the sensor device preparing process S41 and the sensor device mounting process S42.

In this case, the method of manufacturing the gyro sensor 5 can manufacture and provide the gyro sensor 5 with the effects described above.

### Modification

In the following, an exemplary modification of the fifth embodiment will be described.

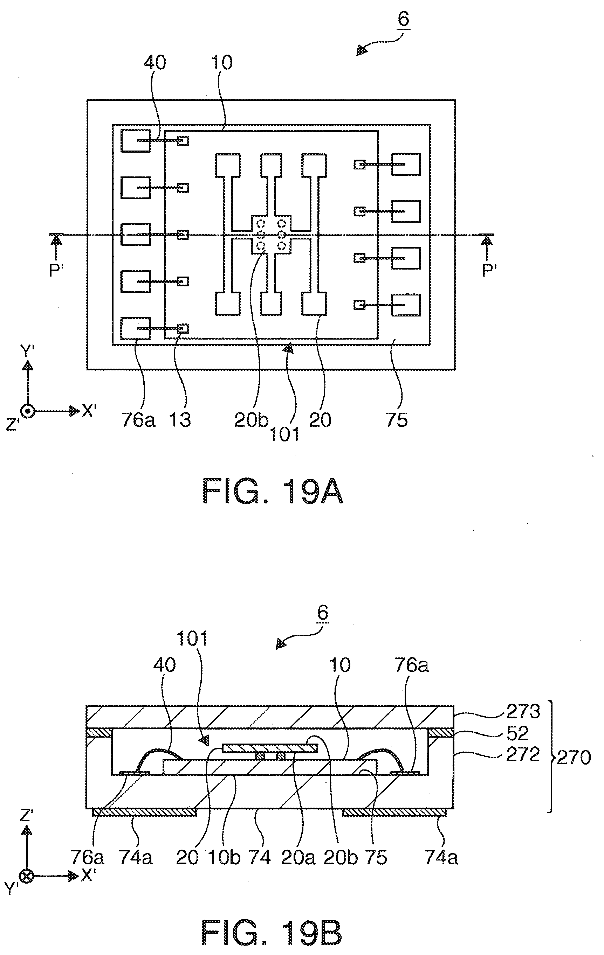

Figs. 19A and 19B are views showing the schematic configuration of a gyro sensor as a motion sensor in a modification of the fifth embodiment. Fig. 19A is a plan view seen from the lid side, and Fig. 19B is a cross-sectional view taken along the line P-P in Fig. 19A. Moreover, in the plan view, a lid is omitted for the sake of convenience.

In addition, sections in common with the fifth embodiment are denoted by the same reference numerals, and the explanation will be omitted and the following explanation will be focused on different sections from the fifth embodiment.

As shown in Figs. 19A and 19B, a gyro sensor 6 as a motion sensor includes a sensor device 101, which has a configuration where the lead 30 is removed from the sensor device 1, instead of the sensor device 1.

In addition, since the configuration of the sensor device 101 is the same as that of the sensor device 1 except for the existence of the lead 30, detailed explanation thereof will be omitted (please refer to the above description of the first embodiment).

In the gyro sensor 6, a non-active surface 10b of a silicon substrate 10 of the sensor device 101 is bonded to an inside bottom surface 75 of a package base 272 in an insulated state by a bonding material, such as insulating adhesive (not shown).

In addition, in the gyro sensor 6, a connection terminal 13 of the silicon substrate 10 and an internal electrode 76a of the package base 272 are connected to each other by a wire 40.

Thus, in the gyro sensor 6, there is no lead 30 in the sensor device 101. Accordingly, since the planar size of the package base 272 and the lid 273 of the package 270 can be reduced compared with the fifth embodiment, the thickness of the gyro sensor 6 can be reduced.

As a result, according to the gyro sensor 6, it is possible to provide a gyro sensor whose planar size and total thickness are smaller than those in the fifth embodiment.

In addition, in the gyro sensor 101, the same effects as in the sensor device 1 can be obtained except for those related to the lead 30.

In addition, the method of manufacturing the gyro sensor 6 is based on the method of manufacturing the gyro sensor 3 and includes the package preparing process S40, the sensor device preparing process S41, the sensor device mounting process S42, and the lid bonding process S43 (refer to Fig. 14).

In the method of manufacturing the gyro sensor 6, one sensor device 101 is prepared and then disposed and housed inside the package base 272 (package 270) in the sensor device preparing process S41 and the sensor device mounting process S42.

In this case, the method of manufacturing the gyro sensor 6 can manufacture and provide the gyro sensor 6 with the effects described above.

Moreover, in the gyro sensor 3 according to the third embodiment, the sensor device 101 may be used instead of the sensor device 1.

In this case, since there is no lead 30 in the sensor device 101, the package 70 can be made to be small in the gyro sensor 3.

In addition, although crystal is used as the base material of the vibrating gyro element 20 in the embodiments and the modification described above, the base material is not limited thereto. For example, it is further possible to use a piezoelectric body, such as e.g. lithium tantalate (LiTaO₃), lithium tetraborate (Li₂B₄O₇), lithium niobate (LiNbO₃), lead zirconate titanate (PZT), zinc oxide (ZnO), and aluminium nitride (AIN), and/or silicon having as a coat a piezoelectric body, such as e.g. zinc oxide (ZnO) and aluminium nitride (AIN).

In addition, although the vibrating gyro element 20 is exemplified as a sensor element of each sensor device in the embodiments and the modification described above, the sensor element is not limited thereto. For example, an acceleration sensing element which reacts to acceleration, a pressure sensing element which reacts to pressure, or a weight sensing element which reacts to weight may also be used.

In addition, although a gyro sensor is exemplified as a motion sensor in the third to fifth embodiments and the modification described above, the motion sensor is not limited thereto. For example, an acceleration sensor using a sensor device including the above-described acceleration sensing element, a pressure sensor using a sensor device including the pressure sensing element, or a weight sensor using a sensor device including the weight sensing element may also be used.

Features, components and specific details of the structures of the above-described embodiments, modifications and application examples may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A sensor device comprising:
a semiconductor substrate (10);
an external connection terminal (12) being provided at an active surface (10a) side of the semiconductor substrate (10);
a stress relief layer (15) made of insulating resin being provided between the semiconductor substrate (10) and the external connection terminal (12);
a first electrode (11) being provided at the active surface (10a) side outside of a region where the stress relief layer (15) is provided;
a wiring line (16) being provided at the active surface (10a) side, the wiring line (16) extending from the first electrode (11) to the external connection terminal (12) and being electrically connected to the first electrode (11) and the external connection terminal (12); and
a sensor element (20) including a base (21), a vibrating section (22a, 22b, 24a, 24b, 25a, 25b) and a connection electrode (29), the vibration section (22a, 22b, 24a, 24b, 25a, 25b) extending from the base (21);
the wiring line (16) being provided with a first portion between the stress relief layer (15) and the external connection terminal (12), the first portion being provided on the stress relief layer (15);
wherein the sensor element (20) is held to the semiconductor substrate (10) by both of a connection between the connection electrode (29) and the external connection terminal (12) and a connection between the external connection terminal (12) and the first portion of the wiring line (16).

2. The sensor device according to Claim 1,
wherein the external connection terminal (12) is a protruding electrode that protrudes from the wiring line (16) to the connection electrode (29).

3. The sensor device according to Claim 1 or 2, further comprising:
a plurality of leads (30) being provided at a surface side (10b) of the semiconductor substrate (10) opposite the active surface (10a), and
a second connection terminal (13) being provided at the active surface (10a) side of the semiconductor substrate (10),
wherein the second connection terminal (13) is electrically connected to the leads (30).

4. The sensor device according to Claim 3,
wherein the leads (30) are bent such that an angle (θ) between the leads (30) and a principal surface (20a; 20b) of the sensor element (20) substantially becomes a right angle.

5. A motion sensor comprising:
the sensor device (1; 2) according to at least one of the Claims 1 to 4; and
a package (70), wherein the sensor device (1; 2) is housed inside the package (70).

6. A motion sensor comprising:
a plurality of sensor devices (1, 2) according to at least one of the Claims 1 to 4; and
a package (70),
wherein the sensor devices (1, 2) are disposed and housed inside the package (70) such that an angle (θ1; θ2) between principal surfaces (20a; 20b) of the sensor elements (20) of the sensor devices (1,2) substantially becomes a right angle.

7. The motion sensor according to Claim 6,
wherein a principal surface (20a; 20b) of at least one of the sensor elements (20) is approximately parallel to a connected surface (75) which is connected to an external member (74) of the package (70).

8. A method of manufacturing a sensor device, comprising:
providing (S2) a stress relief layer (15) made of insulating material at an active surface (10a) side of a semiconductor substrate (10);
providing (S1) a first electrode (11) at the active surface (10a) side of the semiconductor substrate (10) outside of a region where the stress relief layer (15) is provided;
providing (S4) an external connection terminal (12) at the active surface (10a) side of the semiconductor substrate (10), the stress relief layer (15) being provided between the semiconductor substrate (10) and the external connection terminal (12);
providing (S3) a wiring line (16) at the active surface side (10a) of the semiconductor substrate (10), the wiring line (16) extending from the first electrode (11) to the external connection terminal (12) and being electrically connected to the first electrode (11) and the external connection terminal (12), and the rearrangement wiring line (16) being provided with a first portion between the stress relief layer (15) and the external connection terminal (12), the first portion being provided on the stress relief layer (15);
preparing (S8) a sensor element (20) including a base (21), a connection electrode (29) and a vibrating section (22a, 22b, 24a, 24b, 25a, 25b) extending from the base (21); and
connecting (S9) the external connection terminal (12) and the connection electrode (29) of the sensor element (20) to each other, the sensor element (20) being held to the semiconductor substrate (10) by both of a connection between the connection electrode (29) and the external connection terminal (12) and a connection between the external connection terminal (12) and the first portion of the rearrangement wiring line (16).

9. The method of manufacturing a sensor device according to Claim 8, further comprising:
preparing (S5) a lead frame (35) including a plurality of leads (30);
connecting (S6) a surface side (10b) of the semiconductor substrate (10) opposite the active surface (10a) to the plurality of leads (30) in a state positioned over the leads (30); and
connecting (S7) a second connection terminal (13) of the semiconductor substrate (10) and the leads (30) to each other, the second connection terminal (13) being provided at the active surface (10a) side of the semiconductor substrate (10).

10. The method of manufacturing a sensor device according to Claim 9, further comprising:
bending (S110) the leads (30) such that an angle (θ) between the leads (30) and a principal surface (20a; 20b) of the sensor element (20) becomes substantially a right angle.

11. A method of manufacturing a motion sensor, comprising:
preparing a sensor device (1; 2) according to the method of manufacturing a sensor device according to at least one of Claims 8 to 10;
preparing a package (70) for housing the sensor device (1; 2) inside; and
housing the sensor device (1; 2) inside the package (70).

12. A method of manufacturing a motion sensor, comprising:
preparing a plurality of sensor devices (1, 2), each of which is prepared according to the method of manufacturing a sensor device according to at least one of Claims 8 to 10;
preparing a package (70) for housing the plurality of sensor devices (1, 2) inside; and
disposing and housing the plurality of sensor devices (1, 2) inside the package (70) such that an angle (θ1; θ2) between principal surfaces (20a; 20b) of the sensor elements (20) substantially becomes a right angle.

## Patentansprüche

1. Sensorvorrichtung umfassend:
ein Halbleitersubstrat (10);
eine an der Seite einer aktiven Oberfläche (10a) des Halbleitersubstrats (10) angeordnete äußere Anschlussklemme (12);
eine zwischen dem Halbleitersubstrat (10) und der äußeren Anschlussklemme (12) angeordnete Entlastungsschicht (15) aus Isolierharz;
eine an der Seite der aktiven Oberfläche (10a) außerhalb eines Bereichs, in dem die Entlastungsschicht (15) angeordnet ist, angeordnete erste Elektrode (11);
eine an der Seite der aktiven Oberfläche (10a) angeordnete Schaltleitung (16), wobei sich die Schaltleitung (16) von der ersten Elektrode (11) zur äußeren Anschlussklemme (12) erstreckt und mit der ersten Elektrode (11) und der äußeren Anschlussklemme (12) elektrisch verbunden ist; und
ein Sensorelement (20), umfassend einen Sockel (21), einen schwingenden Abschnitt (22a, 22b, 24a, 24b, 25a, 25b) und eine Anschlusselektrode (29), wobei sich der schwingende Abschnitt (22a, 22b, 24a, 24b, 25a, 25b) vom Sockel (21) aus erstreckt;
wobei die Schaltleitung (16) einen ersten Teil zwischen der Entlastungsschicht (15) und der äußeren Anschlussklemme (12) umfasst, wobei der erste Teil auf der Entlastungsschicht (15) angeordnet ist;
wobei das Sensorelement (20) am Halbleitersubstrat (10) durch eine Verbindung zwischen der Anschlusselektrode (29) und der äußeren Anschlussklemme (12) und einer Verbindung zwischen der äußeren Anschlussklemme (12) und dem ersten Teil der Schaltleitung (16) gehalten wird.

2. Sensorvorrichtung nach Anspruch 1,
wobei die äußere Anschlussklemme (12) eine hervorragende Elektrode ist, die von der Schaltleitung (16) zur Anschlusselektrode (29) hervorragt.

3. Sensorvorrichtung nach Anspruch 1 oder 2, ferner umfassend:
eine an einer Oberflächenseite (10b) des Halbleitersubstrats (10) gegenüber der aktiven Oberfläche (10a) angeordnete Vielzahl von Leitungen (30), und
eine an der Seite einer aktiven Oberfläche (10a) angeordnete zweite Anschlussklemme (13) des Halbleitersubstrats (10);
wobei die zweite Anschlussklemme (13) mit den Leitungen (30) elektrisch verbunden ist.

4. Sensorvorrichtung nach Anspruch 3,
wobei die Leitungen (30) so gebogen sind, dass ein Winkel (θ) zwischen den Leitungen (30) und einer Hauptoberfläche (20a; 20b) des Sensorelements (20) im Wesentlichen ein rechter Winkel wird.

5. Bewegungssensor umfassend:
die Sensorvorrichtung (1; 2) nach wenigstens einem der Ansprüche 1 bis 4; und
ein Gehäuse (70), wobei die Sensorvorrichtung (1; 2) im Gehäuse (70) untergebracht ist.

6. Bewegungssensor umfassend:
eine Vielzahl von Sensorvorrichtungen (1, 2) nach wenigstens einem der Ansprüche 1 bis 4; und ein Gehäuse (70),
wobei die Sensorvorrichtungen (1, 2) im Gehäuse (70) angeordnet und untergebracht sind, so dass ein Winkel (θ1; θ2) zwischen Hauptoberflächen (20a; 20b) der Sensorelemente (20) der Sensorvorrichtungen (1, 2) im Wesentlichen ein rechter Winkel wird.

7. Bewegungssensor nach Anspruch 6,
wobei eine Hauptoberfläche (20a; 20b) von wenigstens einem der Sensorelemente (20) etwa parallel zu einer verbundenen Oberfläche (75) ist, die mit einem äußeren Element (74) des Gehäuses (70) verbunden ist.

8. Verfahren zum Herstellen einer Sensorvorrichtung, umfassend:
das Bereitstellen (S2) einer Entlastungsschicht (15) aus Isoliermaterial an der Seite einer aktiven Oberfläche (10a) eines Halbleitersubstrats (10);
das Bereitstellen (S1) einer ersten Elektrode (11) an der Seite der aktiven Oberfläche (10a) des Halbleitersubstrats (10) außerhalb eines Bereichs, in dem die Entlastungsschicht (15) angeordnet ist;
das Bereitstellen (S4) einer äußeren Anschlussklemme (12) an der Seite der aktiven Oberfläche (10a) des Halbleitersubstrats (10), wobei die Entlastungsschicht (15) zwischen dem Halbleitersubstrat (10) und der äußeren Anschlussklemme (12) angeordnet ist;
das Bereitstellen (S3) einer Schaltleitung (16) an der Seite der aktiven Oberfläche (10a) des Halbleitersubstrats (10), wobei sich die Schaltleitung (16) von der ersten Elektrode (11) zur äußeren Anschlussklemme (12) erstreckt und mit der ersten Elektrode (11) und der äußeren Anschlussklemme (12) elektrisch verbunden ist, und die Umordnungsschaltleitung (16) einen ersten Teil zwischen der Entlastungsschicht (15) und der äußeren Anschlussklemme (12) umfasst, wobei der erste Teil auf der Entlastungsschicht (15) angeordnet ist;
das Herstellen (S8) eines Sensorelements (20), umfassend einen Sockel (21), eine Anschlusselektrode (29) und einen sich vom Sockel (21) aus erstreckenden schwingenden Abschnitt (22a, 22b, 24a, 24b, 25a, 25b); und
das Verbinden (S9) der äußeren Anschlussklemme (12) und der Anschlusselektrode (29) des Sensorelements (20) miteinander, wobei das Sensorelement (20) am Halbleitersubstrat (10) durch eine Verbindung zwischen der Anschlusselektrode (29) und der äußeren Anschlussklemme (12) und einer Verbindung zwischen der äußeren Anschlussklemme (12) und dem ersten Teil der Umordnungsschaltleitung (16) gehalten wird.

9. Verfahren zum Herstellen einer Sensorvorrichtung nach Anspruch 8, ferner umfassend:
das Herstellen (S5) eines Leitungsrahmens (35), umfassend eine Vielzahl von Leitungen (30);
das Verbinden (S6) einer Oberflächenseite (10b) des Halbleitersubstrats (10) gegenüber der aktiven Oberfläche (10a) mit der Vielzahl von Leitungen (30) in einem über den Leitungen (30) angeordneten Zustand; und
das Verbinden (S7) einer zweiten Anschlussklemme (13) des Halbleitersubstrats (10) und der Leitungen (30) miteinander, wobei die zweite Anschlussklemme (13) an der Seite der aktiven Oberfläche (10a) des Halbleitersubstrats (10) angeordnet ist.

10. Verfahren zum Herstellen einer Sensorvorrichtung nach Anspruch 9, ferner umfassend:
das Biegen (S110) der Leitungen (30), so dass ein Winkel (θ) zwischen den Leitungen (30) und einer Hauptoberfläche (20a; 20b) des Sensorelements (20) im Wesentlichen ein rechter Winkel wird.

11. Verfahren zum Herstellen eines Bewegungssensors, umfassend:
das Herstellen einer Sensorvorrichtung (1; 2) gemäß dem Verfahren zum Herstellen einer Sensorvorrichtung nach wenigstens einem der Ansprüche 8 bis 10;
das Herstellen eines Gehäuses (70) zum Unterbringen der Sensorvorrichtung (1; 2) im Inneren; und
das Unterbringen der Sensorvorrichtung (1; 2) im Gehäuse (70).

12. Verfahren zum Herstellen eines Bewegungssensors, umfassend:
das Herstellen einer Vielzahl von Sensorvorrichtungen (1, 2), von denen jede gemäß dem Verfahren zum Herstellen einer Sensorvorrichtung nach wenigstens einem der Ansprüche 8 bis 10 hergestellt wird;
das Herstellen eines Gehäuses (70) zum Unterbringen der Vielzahl von Sensorvorrichtungen (1, 2) im Inneren; und das Anordnen und Unterbringen der Vielzahl von Sensorvorrichtungen (1, 2) im Gehäuse (70), so dass ein Winkel (θ1; θ2) zwischen Hauptoberflächen (20a; 20b) der Sensorelemente (20) im Wesentlichen ein rechter Winkel wird.

## Revendications

1. Dispositif de capteur comprenant :
un substrat semi-conducteur (10) ;
une borne de connexion externe (12) située sur un côté surface active (10a) du substrat semi-conducteur (10) ;
une couche de relâchement des contraintes (15) faite de résine isolante, située entre le substrat semi-conducteur (10) et la borne de connexion externe (12) ;
une première électrode (11) située sur le côté surface active (10a) à l'extérieur d'une région dans laquelle se situe la couche de relâchement des contraintes (15) ;
une ligne de câblage (16) située sur le côté surface active (10a), la ligne de câblage (16) s'étendant de la première électrode (11) à la borne de connexion externe (12) et étant connectée électriquement à la première électrode (11) et la borne de connexion externe (12) ; et
un élément capteur (20) comprenant une base (21), une section de vibration (22a, 22b, 24a, 24b, 25a, 25b) et une électrode de connexion (29), la section de vibration (22a, 22b, 24a, 24b, 25a, 25b) s'étendant à partir de la base (21) ;
la ligne de câblage (16) comportant une première partie entre la couche de relâchement des contraintes (15) et la borne de connexion externe (12), la première partie étant située sur la couche de relâchement des contraintes (15) ;
l'élément capteur (20) étant maintenu sur le substrat semi-conducteur (10) au moyen à la fois d'une connexion entre l'électrode de connexion (29) et la borne de connexion externe (12) et d'une connexion entre la borne de connexion externe (12) et la première partie de la ligne de câblage (16).

2. Dispositif de capteur selon la revendication 1,
dans lequel la borne de connexion externe (12) est une électrode saillante qui fait saillie de la ligne de câblage (16) à l'électrode de connexion (29).

3. Dispositif de capteur selon la revendication 1 ou 2, comprenant en outre :
une pluralité de conducteurs (30) situés sur un côté de surface (10b) du substrat semi-conducteur (10) opposé à la surface active (10a), et
une seconde borne de connexion (13) située sur le côté surface active (10a) du substrat semi-conducteur (10),
la seconde borne de connexion (13) étant connectée électriquement aux conducteurs (30).

4. Dispositif de capteur selon la revendication 3,
dans lequel les conducteurs (30) sont pliés de telle sorte qu'un angle (θ) entre les conducteurs (30) et une surface principale (20a ; 20b) de l'élément capteur (20) devient sensiblement un angle droit.

5. Capteur de mouvement comprenant :
le dispositif de capteur (1 ; 2) selon au moins l'une des revendications 1 à 4 ; et
un boîtier (70), le dispositif de capteur (1 ; 2) étant reçu à l'intérieur du boîtier (70).

6. Capteur de mouvements comprenant :
une pluralité de dispositifs de capteur (1, 2) selon au moins l'une des revendications 1 à 4 ; et
un boîtier (70),
les dispositifs de capteur (1, 2) étant disposés et reçus à l'intérieur du boîtier (70) de telle sorte qu'un angle (θ1 ; θ2) entre des surfaces principales (20a ; 20b) des éléments capteurs (20) des dispositifs de capteur (1, 2) devient sensiblement un angle droit.

7. Capteur de mouvements selon la revendication 6,
dans lequel une surface principale (20a ; 20b) d'au moins l'un des éléments capteurs (20) est approximativement parallèle à une surface connectée (75) qui est connectée à un élément externe (74) du boîtier (70).

8. Procédé de fabrication d'un dispositif de capteur, comprenant :
disposer (S2) une couche de relâchement des contraintes (15) faite de matériau isolant sur un côté surface active (10a) d'un substrat semi-conducteur (10) ;
disposer (S1) une première électrode (11) sur le côté surface active (10a) du substrat semi-conducteur (10) à l'extérieur d'une région sur laquelle se situe la couche de relâchement des contraintes (15) ;
disposer (S4) une borne de connexion externe (12) sur le côté surface active (10a) du substrat semi-conducteur (10), la couche de relâchement des contraintes (15) étant située entre le substrat semi-conducteur (10) et la borne de connexion externe (12) ;
disposer (S3) une ligne de câblage (16) sur le côté surface active (10a) du substrat semi-conducteur (10), la ligne de câblage (16) s'étendant de la première électrode (11) à la borne de connexion externe (12) et étant connectée électriquement à la première électrode (11) et à la borne de connexion externe (12), et la ligne de câblage de réagencement (16) comportant une première partie entre la couche de relâchement des contraintes (15) et la borne de connexion externe (12), la première partie étant située sur la couche de relâchement des contraintes (15) ;
préparer (S8) un élément capteur (20) comprenant une base (21), une électrode de connexion (29) et une section de vibration (22a, 22b, 24a, 24b, 25a, 25b) s'étendant à partir de la base (21) ; et
connecter (S9) la borne de connexion externe (12) et l'électrode de connexion (29) de l'élément capteur (20) l'une à l'autre, l'élément capteur (20) étant maintenu sur le substrat semi-conducteur (10) au moyen à la fois d'une connexion entre l'électrode de connexion (29) et la borne de connexion externe (12) et d'une connexion entre la borne de connexion externe (12) et la première partie de la ligne de câblage de réagencement (16).

9. Procédé de fabrication d'un dispositif de capteur selon la revendication 8, comprenant en outre :
préparer (S5) un réseau de conducteurs (35) comprenant une pluralité de conducteurs (30) ;
connecter (S6) un côté de surface (10b) du substrat semi-conducteur (10), opposé à la surface active (10a), à la pluralité de conducteurs (30) dans un état positionné sur les conducteurs (30) ; et
connecter (S7) une seconde borne de connexion (13) du substrat semi-conducteur (10) et les conducteurs (30) les uns aux autres, la seconde borne de connexion (13) étant située sur le côté surface active (10a) du substrat semi-conducteur (10).

10. Procédé de fabrication d'un dispositif de capteur selon la revendication 9, comprenant en outre :
plier (S110) les conducteurs (30) de telle sorte qu'un angle (θ) entre les conducteurs (30) et une surface principale (20a ; 20b) de l'élément capteur (20) devient sensiblement un angle droit.

11. Procédé de fabrication d'un capteur de mouvements, comprenant :
préparer un dispositif de capteur (1 ; 2) selon le procédé de fabrication d'un dispositif de capteur selon au moins l'une des revendications 8 à 10 ;
préparer un boîtier (70) pour recevoir le dispositif de capteur (1 ; 2) à l'intérieur ; et
loger le dispositif de capteur (1 ; 2) à l'intérieur du boîtier (70).

12. Procédé de fabrication d'un capteur de mouvements, comprenant :
préparer une pluralité de dispositifs de capteur (1, 2), chacun d'eux étant préparé selon le procédé de fabrication d'un dispositif de capteur selon au moins l'une des revendications 8 à 10 ;
préparer un boîtier (70) pour recevoir la pluralité de dispositifs de capteur (1, 2) à l'intérieur ; et
disposer et loger la pluralité de dispositifs de capteur (1, 2) à l'intérieur du boîtier (70) de telle sorte qu'un angle (θ1 ; θ2) entre des surfaces principales (20a ; 20b) des éléments capteurs (20) devient sensiblement un angle droit.
